(19) Europäisches Patentamt

European Patent Office

Office européen des brevets

(11) **EP 1 063 256 A1**

(12) **EUROPEAN PATENT APPLICATION**
published in accordance with Art. 158(3) EPC

(43) Date of publication:
**27.12.2000 Bulletin 2000/52**

(21) Application number: **99907942.9**

(22) Date of filing: **16.03.1999**

(51) Int. Cl.[7]: **C08J 9/28**, C08J 9/00, B01D 71/34

(86) International application number:
**PCT/JP99/01265**

(87) International publication number:
**WO 99/47593 (23.09.1999 Gazette 1999/38)**

(84) Designated Contracting States:
**DE FR GB NL**

(30) Priority: **16.03.1998 JP 6576598**

(71) Applicant:
**Asahi Kasei Kogyo Kabushiki Kaisha
Osaka-shi, Osaka 530-8205 (JP)**

(72) Inventors:
• **MATSUDA, Shigenobu
Takatsuki-shi, Osaka 569-1044 (JP)**
• **NAGOYA, Fujiharu
Yokohama-shi, Kanagawa 233-0007 (JP)**
• **KOIZUMI, Toshinori
Fuji-shi, Sizuoka 416-0939 (JP)**

(74) Representative:
**Weber, Thomas, Dr.Dipl.-Chem. et al
Patentanwälte
von Kreisler-Selting-Werner,
Postfach 10 22 41
50462 Köln (DE)**

(54) **MICROPOROUS FILM**

(57)     A microporous membrane is produced by cooling a solution comprising a vinylidene fluoride homopolymer or copolymer having a weight average molecular weight of $1 \times 10^5$ or more and a solvent therefor, to form a two-phase gel, said microporous membrane comprising a polymer phase comprising said vinylidene fluoride homopolymer or copolymer, and intercommunicating voids which have an average pore size measured by the half-dry method of 0.005 to 5 $\mu$m and range from one side of the membrane to the other side, and said microporous membrane having as its internal structure a percolation structure in which the polymer phase forms an isotropic network structure by three-dimensional branching in arbitrary directions, the voids are formed by surrounding by said polymer phase of the network structure and intercommunicate with one another, and the ratio of the maximum pore size measured by the bubble point method to the average pore size measured by the half-dry method is 2.0 or less.

**FIG.1**

**EP 1 063 256 A1**

**Description**

TECHNICAL FIELD

The present invention relates to a microporous membrane and a process for producing the same.

BACKGROUND ART

Microporous membranes are used for various purposes; for example, they are used as various filters including virus-removing filters, ultrafiltration membranes, microfiltration membranes, separators for battery, diaphragms for electrolytic capacitor, electrolyte supports for solid electrolyte battery, etc. Important factors in these purposes of use are the pore size and structure homogeneity of the membranes, as well as their permeability to a fluid and their separating properties in separation of fine particles from the fluid, which are dependent on the pore size and the structure homogeneity.

When a microporous membrane is used as a separation membrane, the pore size of the membrane should be selected depending on the size of a substance to be separated. The homogeneity, i.e., the pore size distribution remarkably affects the separating capacity of the membrane. In addition, the permeability to a fluid greatly affects the separation efficiency. On the other hand, there is desired a process for stable production of the microporous membrane which permits very free control of the above-mentioned characteristics and absorbs variations in production conditions.

Microporous membranes made of a vinylidene fluoride homopolymer or copolymer are expected to be excellent in various properties such as chemical resistance, heat resistance and mechanical properties.

As a process for producing the microporous membrane made of a vinylidene fluoride homopolymer or copolymer, there have been, for example, (a) a wet membrane-producing technique comprising uniformly dissolving a vinylidene fluoride homopolymer or copolymer in a solvent, and then immersing the resulting solution in a non-solvent incapable of dissolving the vinylidene fluoride homopolymer or copolymer, to obtain a microporous membrane (for example, JP-A-7-265674), (b) a process comprising melt-shaping a mixture of a vinylidene fluoride homopolymer or copolymer, an organic liquid and hydrophilic inorganic fine powder, and then extracting the organic liquid and the hydrophilic inorganic fine powder from the shaped product to obtain a microporous membrane (JP-A-58-93734), and (c) a process comprising melt-shaping a mixture of a vinylidene fluoride homopolymer or copolymer, an organic liquid and hydrophobic inorganic fine powder, and then extracting the organic liquid and the hydrophobic inorganic fine powder from the shaped product to obtain a microporous membrane (JP-A-3-215535).

Most of microporous membranes obtained by the wet membrane-producing technique are inhomogeneous microporous membranes having a skin layer, but the microporous membrane disclosed in the above reference JP-A-7-265674 is isotropic and skinless. In the wet membrane-producing technique, the solvent is removed immediately after the phase separation, so that no two-phase gel like that in the present invention is formed. Moreover, the membrane obtained by wet membrane-producing technique is poor in mechanical strength.

JP-A-60-97001 discloses a process for producing a microporous membrane having a network formed therein. In detail, this process comprises casting a membrane-producing stock solution containing a poly(vinylidene fluoride), a good solvent, a poor solvent and a water-soluble polymer, allowing wet phase separation to proceed in the stock solution under a steam atmosphere, and then removing the good solvent, the poor solvent and the water-soluble polymer in a washing bath to obtain the network. In this case, the phase separation occurs from a portion of the membrane-producing stock solution where steam is in contact with the stock solution, and the phase separation propagates gradually inside the stock solution. In this membrane production process, it can be presumed that a two-phase gel is formed before the washing in the washing bath, but this two-phase gel is different from that formed by cooling in the present invention. The steam atmosphere is necessary in said membrane production method, and the membrane production principle that the phase separation is caused by introducing a substance not contained in the membrane-producing stock solution, such as steam, into the membrane-producing stock solution indeed corresponds to the mechanism of wet phase separation. Moreover, since the membrane production principle is the same as that of the wet membrane-producing technique, no sufficient mechanical strength can be attained.

A microporous membrane produced by the process using hydrophilic silica disclosed in JP-A-58-93734 is disadvantageous in that a large number of macro-voids are present in the membrane, so that the membrane has a low breaking extension (degree of elongation before breaking) and cannot be used at a high temperature and a high pressure.

The processes comprising melt-shaping a mixture of a vinylidene fluoride homopolymer or copolymer, an organic liquid and inorganic fine powder of hydrophobic or hydrophilic silica or the like are disadvantageous in that structure defects such as pinholes are easily produced if the dispersed state of the inorganic fine powder is not satisfactory. In addition, from the viewpoint of not only performance characteristics but also production process, said processes are disadvantageous, for example, in that the structure defects cause a decrease of the yield and that the production time is increased because a step of extracting the inorganic fine powder is added besides a step of extracting the organic liquid. A microporous membrane produced by the process using hydrophobic silica disclosed in JP-A-3-215535 has a relatively homogeneous structure and high breaking strength and breaking extension but has structure defects due to the above-mentioned silica.

JP-A-58-93734 and JP-A-3-215535 disclose employment of an aqueous alkali solution such as sodium hydroxide or potassium hydroxide for extracting hydrophobic or hydrophilic silica, but the employment of the aqueous alkali solution is disadvantageous, for example, in that the resulting vinylidene fluoride homopolymer or copolymer microporous membrane is colored light brown or brown by the aqueous alkali solution. Furthermore, the deterioration of the mechanical strength at the time of the silica extraction or decolorizing becomes a problem in some cases.

JP-A-2-263844 discloses in its Example 8 a process for producing a membrane of hollow fiber in which a poly(vinylidene fluoride) with a molecular weight of $4.34 \times 10^5$ is dissolved in a mixed solvent of ε-caprolactam, γ-butyrolactone and dioctyl adipate (18.75 : 18.75: 62.5 by weight) to a concentration of 27 wt% at 185°C. The resulting solution is introduced into a nozzle for hollow fiber to form a hollow fiber membrane, which is cooled in a water bath at 20°C. The membrane solidifies owing to heat-induced phase separation when its temperature becomes lower than the phase separation temperature and crystallization temperature of the polymer solution. Then the aforesaid mixed solvent is extracted with isopropyl alcohol. JP-A-2-263844 describes the maximum pore size of the obtained membrane as being 0.47 µm. In this case, the dissolution temperature of the solution is about 40°C higher than the phase separation temperature, and it is conjectured that the dissolution occurs at a temperature higher than Tu defined hereinafter. Although the above invention cannot be directly compared with the present invention because JP-A-2-263844 does not describe the structure and pore size distribution of the obtained membrane, the dissolution occurs at such a higher temperature in the above invention and it can be speculated on the basis of Comparative Example 11 described hereinafter that the structure of the membrane is coarse. In practice, the ratio of the maximum pore size to the average pore size is 3.19 as described hereinafter in Comparative Example 11, namely, the pore size distribution is wide, and the membrane had a low breaking extension. Thus, it can be concluded that the percolation structure according to the present invention has not been attained in the above invention.

DISCLOSURE OF THE INVENTION

The present invention is intended to provide a vinylidene fluoride homopolymer or copolymer microporous membrane which is free from the above problems, has a homogeneous structure, and is excellent in permeability to a fluid, separation properties in separating of fine particles from the fluid, mechanical properties and chemical resistance, and a process for producing said microporous membrane.

In order to achieve the above object, the present inventors investigated various methods which made it possible to control the structure of a vinylidene fluoride homopolymer or copolymer microporous membrane, and consequently the present invention has been accomplished by the combination of employing of a vinylidene fluoride homopolymer or copolymer having a weight average molecular weight of $1 \times 10^5$ or more; dissolving of the vinylidene fluoride homopolymer or copolymer in a specific solvent at a specific temperature; employing a specific cooling method; and optionally stretching with a stretching residual strain of 100% or less.

That is, the present invention is a microporous membrane produced by cooling a solution comprising a vinylidene fluoride homopolymer or copolymer having a weight average molecular weight of $1 \times 10^5$ or more and a solvent therefor, to form a two-phase gel, said microporous membrane comprising a polymer phase comprising said vinylidene fluoride homopolymer or copolymer, and intercommunicating voids which have an average pore size measured by the half-dry method of 0.005 to 5 µm and extend from one side of the membrane to the other side, and said microporous membrane having the percolation structure as its internal structure.

In the present invention, the term "average pore size measured by the half-dry method" means an average pore size measured with ethanol according to ASTM F316-86.

The term "the percolation structure" means a structure in which the polymer phase forms an isotropic network structure by three-dimensional branching in arbitrary directions. The voids are formed within an area surrounded by the polymer phase of the network structure and intercommunicate with one another, and the ratio of the maximum pore size measured by the bubble point method to the average pore size measured by the half-dry method is 2.0 or less. Here, the term "maximum pore size measured by the bubble point method" means a maximum pore size measured with ethanol according to ASTM F316-86 and E128-61.

In the microporous membrane of the present invention, the average pore size measured by scanning electron microscopy of the surface layer on at least one side of the membrane is the same as or larger than the average pore size measured by scanning electron microscopy of the internal structure, or the average pore size measured by scanning electron microscopy of the surface layer on at least one side of the membrane is smaller than the average pore size measured by scanning electron microscopy of the internal structure.

In the present invention, the term "average pore size measured by scanning electron microscopy" means a pore size measured by the method described hereinafter.

Said microporous membrane is produced by using the above-mentioned vinylidene fluoride homopolymer or copolymer and a solvent capable of forming a microporous membrane having the percolation structure, in a weight ratio of 10 : 90 to 60 : 40; dissolving the vinylidene fluoride homopolymer or copolymer in the solvent at a temperature Ts at which the percolation structure can be formed; extruding the resulting solution with an extruder; cooling the extruded solution to form a gel-like shaped product composed of a two-phase gel; and then subjecting the shaped product to any treatment selected from the group consisting of the following treatments i), ii) and iii):

i) The solvent is removed by the use of a volatile liquid without stretching the shaped product.
ii) Before removing the solvent, the shaped product is stretched with a stretching residual strain of 100% or less, and then the solvent is removed by the use of a volatile liquid.
iii) The solvent is removed by the use of a volatile liquid, followed by stretching with a stretching residual strain of 100% or less.

In addition, said microporous membrane is produced by using the above-mentioned vinylidene fluoride homopolymer or copolymer and a mixture of a solvent capable of forming a microporous membrane having the percolation structure and a thermoplastic resin miscible with the vinylidene fluoride homopolymer or copolymer (hereinafter referred to as the "miscible resin"), in a weight ratio of 10 : 90 to 60 : 40; dissolving the vinylidene fluoride homopolymer or copolymer and the miscible resin in the aforesaid solvent at a temperature Ts at which the percolation structure can be formed, under the following conditions: the total amount of the vinylidene fluoride homopolymer or copolymer and the miscible resin is 60 wt% or less based on the weight of the resulting solution consisting of the vinylidene fluoride homopolymer or copolymer, the miscible resin and the solvent, and the weight ratio of the vinylidene fluoride homopolymer or copolymer to the miscible resin is 40 : 60 to 90 : 10; extruding the solution with an extruder; cooling the extruded solution to form a gel-like shaped product composed of a two-phase gel; and then subjecting the shaped product to any treatment selected from the group consisting of the following treatments iv), v) and vi):

iv) The solvent and the miscible resin are removed by the use of a volatile liquid without stretching the shaped product.
v) Before removing the solvent and the miscible resin, the shaped product is stretched with a stretching residual strain of 100% or less, and then the solvent is removed by the use of a volatile liquid.
vi) The solvent and the miscible resin are removed by the use of a volatile liquid, followed by stretching with a stretching residual strain of 100% or less.

In the present invention, "solvent capable of forming a microporous membrane having the percolation structure" is defined as follows. First, for solutions consisting of the vinylidene fluoride homopolymer or copolymer and a solvent therefor and having concentrations in a range of 10 to 60 wt%, or solutions consisting of the vinylidene fluoride homopolymer or copolymer, a solvent therefor and the miscible resin and having any concentrations in a range of 10 to 60 wt%, dissolution temperature Ts is plotted as abscissa at regular intervals of 5°C, starting from Ts = 100°C, and the breaking extension TL of a membrane produced from the solution having each dissolution temperature is plotted as ordinate. In this case, a dissolution temperature at which - $(TL_{s+5} - TLs) / \{(Ts + 5°C) - Ts\}$ (wherein $TL_{s+5}$ is a TL value at Ts + 5°C and TLs is a TL value at Ts) becomes maximum is taken as Ts max, and a temperature 2.5°C higher than Ts max (Ts max + 2.5°C) is taken as Tu. On the other hand, when Ts is plotted as abscissa and the porosity P of the membrane as ordinate in the same manner as above, a dissolution temperature at which $(P_{s+5} - Ps) / \{(Ts + 5°C) - Ts\}$ (wherein $P_{s+5}$ is a P value at Ts + 5°C and Ps is a P value at Ts) becomes maximum is taken as T's max, and a temperature 2.5°C higher than T's max (T's max + 2.5°C) is taken as Tl. When at least one solution having a concentration in the above concentration range of the vinylidene fluoride homopolymer or copolymer has both Tl and Tu in such a way that (Tu - Tl) > 0, the solvent is called a solvent capable of forming a microporous membrane having the percolation structure.

The term "temperature at which the percolation structure can be formed" means a dissolution temperature Ts satisfying the condition Tl≦Ts≦Tu. The dissolution temperature Ts referred to here is a solution temperature at the time of the membrane formation.

Furthermore, the microporous membrane of the present invention is produced by using the above-mentioned vinylidene fluoride homopolymer or copolymer and a solvent capable of permitting observation of planar liquid-liquid interface, in a weight ratio of 10 : 90 to 60 : 40; uniformly dissolving the vinylidene fluoride homopolymer or copolymer in said solvent to obtain a one-phase solution at a dissolution temperature Ts 10°C or more higher than the cloud point temperature determined by a standing method; extruding the resulting solution with an extruder; cooling the extruded solution to form a gel-like shaped product composed of a two-phase gel; and then subjecting the shaped product to any treatment selected from the group consisting of the following treatments vii), viii) and ix):
vii) The solvent is removed by the use of a volatile liquid without stretching the shaped product.
viii) Before removing the solvent, the shaped product is stretched with a stretching residual strain of 100% or less, and then the solvent is removed by the use of a volatile liquid.

ix) The solvent is removed by the use of a volatile liquid, followed by stretching with a stretching residual strain of 100% or less.

In the present invention, the term "solvent capable of permitting observation of planar liquid-liquid interface" means a solvent which makes it possible to observe the planar liquid-liquid interface between a phase rich in the vinylidene fluoride homopolymer or copolymer and a phase lean in the vinylidene fluoride homopolymer or copolymer by a standing method comprising lowering the temperature of a solution prepared by uniform one-phase dissolution of the vinylidene fluoride homopolymer or copolymer in the solvent to any concentration in a range of 10 to 60 wt%, to any observation temperature which is not lower than the crystallization temperature and is in a two-phase region, and allowing the solution to stand.

The microporous membrane of the present invention has a homogeneous structure and is excellent in permeability to a fluid, separation properties in separating of fine particles from the fluid, mechanical properties and chemical resistance.

The present invention also provides a gel-like shaped product composed of a two-phase gel and obtained by cooling a solution, which is suitably used as, for example, an electrolyte support for solid electrolyte battery by replacing the solvent with an electrolytic solution as described hereinafter.

BRIEF DESCRIPTION OF DRAWINGS

Fig. 1 is a graph showing relationships between the crystallization temperature Tc and dissolution temperature Ts of solutions of a vinylidene fluoride homopolymer (weight average molecular weight: $3.62 \times 10^5$) in diethyl phthalate (DEP).

Fig. 2 is an illustration showing a relationship between the crystallization temperature Tc and dissolution temperature Ts of a solution of the vinylidene fluoride homopolymer or copolymer in a solvent system, and a temperature range in which the percolation structure can be formed.

Fig. 3 is a graph showing relationships between dissolution temperature Ts and a) the porosity (%), b) breaking strength (Kgf/cm$^2$) and C) breaking extension (%) of hollow fiber type microporous membranes.

Fig. 4 is an illustration showing a relationship between a cloud point curve and crystallization curves which are different in position at different dissolution temperatures.

Fig. 5A, Fig. 5B and Fig. 5C are scanning electron micrographs of sections, respectively, of microporous membranes at different dissolution temperatures Ts.

Fig. 6A, Fig. 6B and Fig. 6C are scanning electron micrographs of sections, respectively, of microporous membranes having various spherical-particle network structures.

Figs. 7A to 7I are scanning electron micrographs of the surfaces, respectively, of microporous membranes obtained by using various cooling media.

BEST MODE FOR CARRYING OUT THE INVENTION

The present invention is explained below in detail.

The internal structure of a microporous membrane is a structure observed by investigating any section (a vertical section in most cases) of the microporous membrane by a scanning electron microscope or the like from a direction perpendicular to the section. The structure of the surface layer of the microporous membrane is a structure observed by investigating the surface of the microporous membrane by a scanning electron microscope or the like from a direction perpendicular to the surface.

The microporous membrane of the present invention is produced by forming a two-phase gel by cooling either a solution consisting of the above-mentioned vinylidene fluoride homopolymer or copolymer and a solvent capable of forming a microporous membrane having the percolation structure or a solvent capable of permitting observation of planar liquid-liquid interface, or a solution consisting of the vinylidene fluoride homopolymer or copolymer, a solvent capable of forming a microporous membrane having the percolation structure or a solvent capable of permitting observation of planar liquid-liquid interface, and the miscible resin.

The two-phase gel referred to here is composed of a polymer-rich phase having a high concentration of the vinylidene fluoride homopolymer or copolymer and a polymer-lean phase having a low concentration of said homopolymer or copolymer, and contains a large volume of the above-mentioned solvent capable of forming a microporous membrane having the percolation structure or solvent capable of permitting observation of planar liquid-liquid interface. The solvent cannot be removed from the two-phase gel referred to herein without using the volatile liquid described hereinafter. For example, cooling with a liquid cooling medium does not replace the solvent with the liquid cooling medium to remove the solvent.

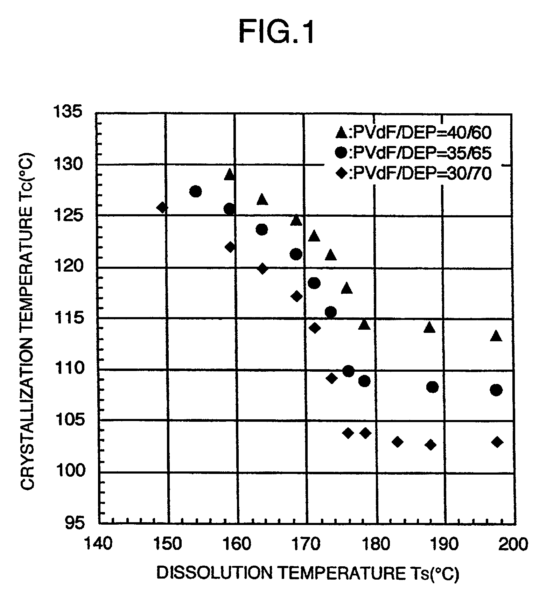

In general, when a polymer solution is allowed to stand at any temperature in a temperature range corresponding to a two-phase region which is below the cloud point temperature of the polymer solution and above the crystallization temperature of a polymer-rich phase, a typical example of the liquid-liquid interface between the polymer-rich phase and a polymer-lean phase observed is planar as described, for example, in Fig. 1. 2 of K. KAMIDE "THERMODYNAMICS OF POLYMER SOLUTIONS - PHASE EQUILIBRIA AND CRITICAL PHENOMENA-" (ELSEVIER, 1990). The liquid-liquid interface is observed by a standing method, for example, in the following manner. A dispersion (or a liquid swollen product) in a solvent of a polymer weighed so as to have each predetermined polymer weight fraction is sealed in a sample tube under nitrogen and heated together with the sample tube in a high-temperature thermostat (for example, TAMSON BATH TV7000, Netherland) filled with silicone oil to prepare a solution. This dissolution by heating is carried out by heating the sample tube for 6 to 24 hours at a temperature (for example, 240°C) at which it is considered that the contents of the sample tube assume a one-phase state. After the uniform one-phase state of the solution is visually confirmed, the solution is cooled to an observation temperature, and the phase state is observed after standing at this temperature for 10 to 48 hours. When the observation temperature is lower than the cloud point temperature, namely, when the solution is in a two-phase region, liquid-liquid phase separation is observed.

When the phase state of a solution system using the solvent capable of forming a microporous membrane having the percolation structure according to the present invention is observed by the standing method, the separated states of a phase rich in the vinylidene fluoride homopolymer or copolymer and a phase lean in the vinylidene fluoride homopolymer or copolymer are visually observed, but no planar interface is formed. Moreover, in some cases, the liquid-liquid interface between the phase rich in the vinylidene fluoride homopolymer or copolymer and the phase lean in the homopolymr or copolymer is difficult to observe visually. In such a case, the solution before cooling looks uniform when visually observed, but there is a possibility that the solution may contain fine crystals of the homopolymer or copolymer dispersed therein as described hereinafter. When such a solution is cooled, the whole solution becomes whitely turbid and looks gelatinized. As to the reason why no liquid-liquid interface is visually observed, there is a hypothesis that gelation and liquid-liquid phase separation compete with each other, or a conjecture that the polymer-lean phase also contains the homopolymer or copolymer in such an amount that crystallization thereof is observed. When the observation of the liquid-liquid interface is thus difficult, the presence of the polymer-lean phase and the polymer-rich phase can be confirmed in some cases by tilting a sample tube in which the polymer solution is allowed to stand. That is, since the polymer-rich phase has a higher viscosity than does the polymer-lean phase, these two liquids different in viscosity, can be distinguished by tilting the vessel.

The planar liquid-liquid interface is exceptionally observed, and only in this exceptional case, the percolation structure is formed even when a two-phase gel is formed by cooling a solution obtained by uniform one-phase dissolution at a high temperature. In the present invention, the term "solvent capable of permitting observation of planar liquid-liquid interface" is defined as a solvent which permits observation of the planar liquid-liquid interface between a phase rich in the vinylidene fluoride homopolymer or copolymer and a phase lean in the vinylidene fluoride homopolymer or copolymer by the standing method.

The average pore size measured by the half-dry method of the microporous membrane of the present invention ranges from 0.005 to 5 μm, and within this range, the microporous membrane can be suitably used as, for example, a filter for filtration of a liquid or a gas. When the average pore size is more than 5 μm, the number of structure defects such as pinholes is increased, so that no microporous membrane having satisfactory separating properties can be obtained. When the average pore size is less than 0.005 μm, the pore size is too small, so that the microporous membrane cannot exhibit the porous membrane properties aimed at by the present invention, such as those for water treatment, virus removal, etc. When the microporous membrane is used as a filter for water treatment, the average pore size is preferably not more than 5 μm and not less than 0.05 μm. In the case of water treatment, when the average pore size is less than 0.05 μm, the pore size is too small, resulting in a deteriorated permeability. When the microporous membrane is used as a filter for virus removal, its average pore size ranges preferably from 0.005 to 0.1 μm, more preferably from 0.005 to 0.03 μm.

The ratio of the maximum pore size measured by the bubble point method to the average pore size measured by the half-dry method of the microporous membrane of the present invention is 2.0 or less, preferably 1.5 or less. Since this ratio of the maximum pore size to the average pore size is 2.0 or less, the microporous membrane of the present invention is characterized by its very excellent fractionating properties in removal of impurities from a liquid or a gas.

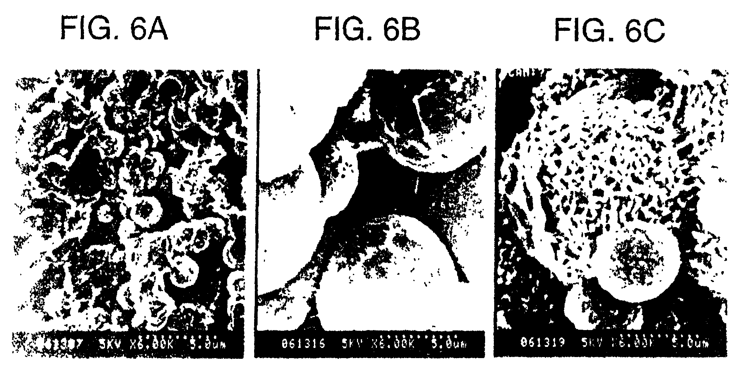

As described above, the microporous membrane of the present invention has the following percolation structure: the polymer phase forms an isotropic network structure by three-dimensional branching in arbitrary directions, the voids are formed within an area surrounded by the polymer phase of the network structure and intercommunicate with one another, and the ratio of the maximum pore size measured by the bubble point method to the average pore size measured by the half-dry method is 2.0 or less. On the other hand, spherical-particle network structures in which a large portion of a polymer phase is regarded substantially as spherical particles (see, for example, Figs. 6A to 6C) are different from the percolation structure according to the present invention. In the spherical-particle network structures, the polymer phase has joints at contact points between spheres, resulting in deteriorated mechanical properties.

Spherical-pore network structures and ellipsoidal-pore network structures, in which most of voids are regarded substantially as spherical pores or ellipsoidal pores are also different from the percolation structure according to the present invention. In the spherical-pore network structures or ellipsoidal-pore network structures, the pores are joined together at contact points between spheres or ellipsoids, resulting in a deteriorated permeability to a liquid. The spherical-pore network structures or ellipsoidal-pore network structures are called cellular structures in some cases because they look like structures composed of an assembly of spherical or ellipsoidal cells.

As described above, the structure of the isotropic, skinless and porous poly(vinylidene fluoride) membrane disclosed in JP-A-7-265674 is also different from the percolation structure according to the present invention. A wet casting technique, i.e., the wet membrane-producing technique is employed in JP-A-265674 and a microporous membrane obtained by the wet membrane-producing technique is poor in mechanical strength as described above.

In such a wet membrane-producing technique, a membrane is produced by immersing a homogeneous solution consisting of a polymer and a single or mixed solvent therefor in a solidifying medium consisting of a single or mixed non-solvent. In this case, in the solidifying medium, phase separation between a polymer-rich phase having a high concentration of the vinylidene fluoride homopolymer or copolymer and a polymer-lean phase having a low concentration of the homopolymer or copolymer occurs from a portion of the solution where the solution is in contact with the non-solvent, and the phase separation propagates gradually inside the solution. However, after the phase separation, instant replacement of the solvent with the non-solvent takes place, so that the polymer-lean phase diffuses into the non-solvent and that the solvent is removed from the polymer-rich phase. Thus, desolvation is finally achieved, resulting in the solidification of the polymer and the formation of a membrane structure.

In the wet membrane-producing technique, an isotropic structure is attained when the precipitating capability of the non-solvent is low. When the precipitating capability of the non-solvent is low, relatively slow desolvation occurs and hence no surface layer is formed. By contrast, when the precipitating capability of the non-solvent is high, a structure comprising non-isotropic macro-voids and a dense skin layer is formed which is another typical structure formed by the wet membrane-producing technique. The reason is that when the precipitating capability is high, a skin is formed at first and rapid desolvation occurs owing to permeation phenomenon through the skin.

On the other hand, in the process of the present invention, when the homogeneous solution is cooled, the homopolymer or copolymer is solidified by crystallization, so that a gel-like shaped product composed of a two-phase gel is formed. No desolvation occurs in the process of the present invention.

The network structure according to the present invention, i.e., the isotropic network structure formed by three-dimensional branching by forming a two-phase gel by cooling contributes to effects such as a high elongation, a high virus-removing capability, a high water permeability, a high ionic conductivity, a high charging efficiency, etc.

That is, the microporous membrane of the present invention has a homogeneous structure and is excellent in permeability to a fluid, separation properties in separating fine particles from the fluid, mechanical properties and chemical resistance. The excellence in liquid permeability means that said microporous membrane is superior in liquid permeability to a membrane having the same average pore size as that of said microporous membrane. A microporous membrane having an excellent liquid permeability is advantageous, for example, in that a membrane module can be made compact because the microporous membrane has a high throughput capacity per unit membrane area.

The structure of the surface layer of the microporous membrane of the present invention is the same as the internal structure in some cases or different from the internal structure in other cases when observed by a scanning electron microscope. Whether said structure is the same as or different from the internal structure, the average pore size measured by scanning electron microscopy of the surface layer can be adjusted so as to be the same as or larger than the average pore size measured by scanning electron microscopy of the internal structure, by choosing proper production conditions. Owing to this adjustment, the vinylidene fluoride homopolymer or copolymer microporous membrane of the present invention, having the percolation structure as the internal structure, can exhibit the microporous membrane properties aimed at by the present invention. When the average pore size measured by scanning electron microscopy of the surface layer is larger than the average pore size measured by scanning electron microscopy of the internal structure, the surface layer can be designed to be effective as a prefilter.

When the solution extruded by the use of an extruder is cooled with air or rolls, the structure of the surface layer is the same as the internal structure when observed by a scanning electron microscope. In this case, the average pore size of the surface layer can be increased by employing a cooling-temperature gradient. When the extruded solution is cooled with air, the cooling-temperature gradient can be employed, for example, by varying the temperature of cold air blown against the extruded solution. When the extruded solution is cooled with rolls, the cooling-temperature gradient can be employed, for example, by making the temperature of the first roll different from that of the second or third roll. In both cases, the average pore size of the surface layer tends to be increased when the cooling temperature at a portion near the extrusion orifice of the solution is set at a higher temperature.

When the solution extruded by the use of an extruder is cooled with a liquid cooling medium, the structure of the surface layer is different from the internal structure when observed by a scanning electron microscope. In this case, the average pore size of the surface layer can be increased by properly choosing the cooling medium, as described hereinafter.

When the average pore sizes measured by scanning electron microscopy of the surface layer and the internal structure are different, the thickness of the surface layer is not less than 0.1 μm and usually not more than 3 μm, whether the structure of the surface layer is different from or the same as the internal structure when observed by a scanning electron microscope. When the average pore sizes are measured by scanning electron microscopy, an image processor is utilized as described hereinafter.

The present invention also includes a case where the average pore size measured by scanning electron microscopy of the surface layer on at least one side of the microporous membrane is smaller than the average pore size measured by scanning electron microscopy of the internal structure. In this case, the surface layer denser than the internal structure has the effect of preventing impurities in a liquid or a gas from intruding into the membrane. The thickness of the surface layer in this case is also not less than 0.1 μm and usually not more than 3 μm. The average pore size of said denser surface layer is usually not less than 0.001 μm and not more than 0.1 μm.

In the present invention, the weight average molecular weight of the vinylidene fluoride homopolymer or copolymer is $1 \times 10^5$ or more. When the weight average molecular weight is less than $1 \times 10^5$, the viscosity of a solution of the homopolymer or copolymer is disadvantageously low for forming a gel-like porous material, and the resulting microporous membrane possesses deteriorated mechanical properties. The weight average molecular weight of said vinylidene fluoride homopolymer or copolymer is preferably $3 \times 10^5$ to $2 \times 10^6$, and a mixture of two or more vinylidene fluoride homopolymer or copolymers having different weight average molecular weights may be used.

Examples of the vinylidene fluoride homopolymer or copolymer used in the present invention are vinylidene fluoride homopolymers and vinylidene fluoride copolymers. As the vinylidene fluoride copolymers, there are used copolymers of vinylidene fluoride and at least one member selected from the group consisting of ethylene tetrafluoride, propylene hexafluoride, ethylene trifluoride chloride and ethylene. The vinylidene fluoride homopolymers are especially preferable. Mixtures of two or more of these vinylidene fluoride homopolymers or copolymers may also be used.

If necessary, various additives such as antioxidants, ultraviolet absorbers, lubricants, anti-blocking agents, etc. may be added to the vinylidene fluoride homopolymer or copolymer so long as they do not defeat the object of the present invention.

An example of process for producing the vinylidene fluoride homopolymer or copolymer microporous membrane of the present invention is explained below.

In the present invention, a starting solution of the vinylidene fluoride homopolymer or copolymer is prepared by heating the vinylidene fluoride homopolymer or copolymer and a solvent capable of forming a microporous membrane having the percolation structure, in a weight ratio of 10 : 90 to 60 : 40 at a temperature at which the percolation structure can be formed, to dissolve the vinylidene fluoride homopolymer or copolymer.

Another starting solution of the vinylidene fluoride homopolymer or copolymer can be prepared by heating the vinylidene fluoride homopolymer or copolymer and a mixture of a solvent capable of forming a microporous membrane having the percolation structure and the miscible resin (hereinafter referred to as "solvent/miscible resin mixture"), in a weight ratio of 10 : 90 to 60 : 40 and in proportions satisfying the following conditions: the total amount of the vinylidene fluoride homopolymer or copolymer and the miscible resin is 60 wt% or less based on the weight of the resulting solution, and the weight ratio of the vinylidene fluoride homopolymer or copolymer to the miscible resin is 40 : 60 to 90 : 10; and thereby dissolving the vinylidene fluoride homopolymer or copolymer and miscible resin.

Fig. 1 shows relationships between the crystallization temperature Tc and dissolution temperature Ts of solutions of a vinylidene fluoride homopolymer (weight average molecular weight: $3.62 \times 10^5$) in diethyl phthalate (DEP). The weight fractions of the vinylidene fluoride homopolymer are 30 wt% (◊), 35 wt% (○) and 40 wt% (△). At all the weight fractions, the crystallization temperature Tc falls with a rise in the dissolution temperature Ts and becomes substantially constant at a dissolution temperature Ta of about 178°C or higher. In this case, in a range of Ts < 178°C, there is a possibility that the solution may contain fine crystals of the polymer dispersed therein. It can also be speculated that the number of fine crystals per unit volume increases with a lowering of Ts in a range of Ts < 178°C.

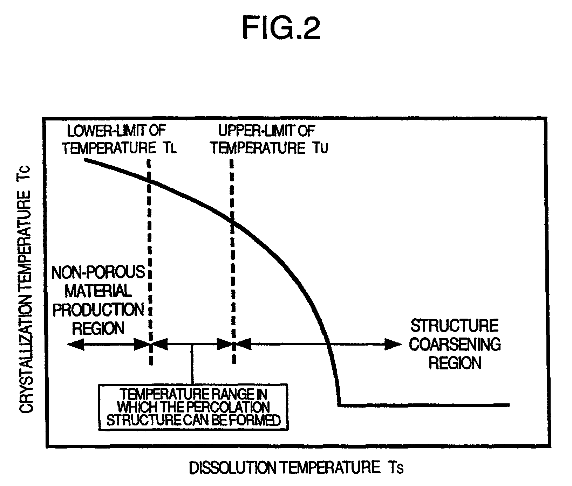

Fig. 2 is a schematic illustration showing a relationship between the crystallization temperature Tc and dissolution temperature Ts of a solution of the vinylidene fluoride homopolymer or copolymer in a solvent capable of forming a microporous membrane having the percolation structure. Fig. 2 also shows a temperature range in which the percolation structure can be formed.

The percolation structure is densified with a lowering of the dissolution temperature in the temperature range in which the percolation structure can be formed. From a solution obtained by dissolution at a temperature below the temperature above which the percolation structure can be formed, only a non-porous shaped product can be obtained, resulting in a markedly decreased porosity. When the dissolution temperature is further lowered, no homogeneous solution can be obtained. From a solution obtained by dissolution at a temperature above the temperature range in which the percolation structure can be formed, only a shaped product having a coarse internal structure can be obtained, resulting in remarkably decreased mechanical strength and elongation. When the internal structure is coarsened, the average pore size is increased and moreover, the pore size distribution is widened. That is, the ratio of the maximum pore size measured by the bubble point method to the average pore size measured by the half-dry method becomes more than 2.0.

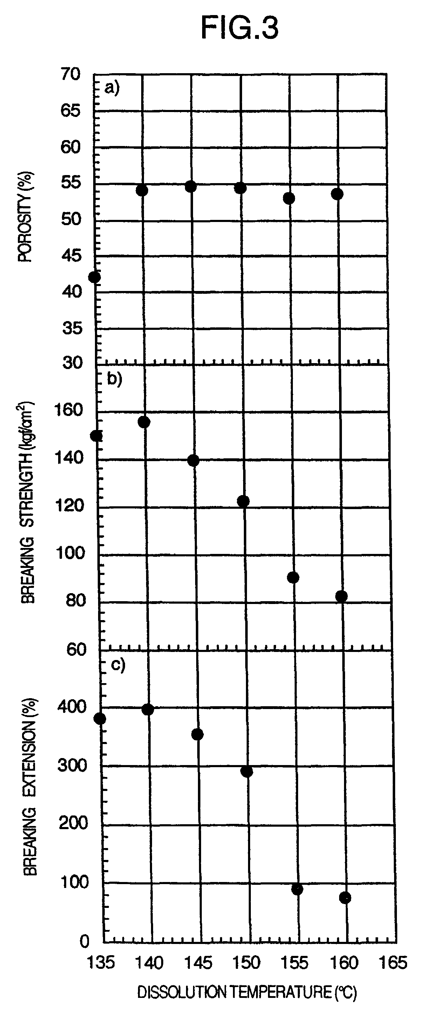

Fig. 3 shows examples of these phenomena. Fig. 3, a), b) and c) show relationships between each of the porosity, breaking strength and breaking extension, respectively, of vinylidene fluoride homopolymer or copolymer microporous membranes produced at different dissolution temperatures Ts, and the dissolution temperatures Ts. The microporous membranes of Ts = 135, 140, 145, 150, 155 and 160°C were prepared by the processes described in Comparative Example 7, Example 9, Example 7, Example 8, Comparative Example 8 and Comparative Example 9, respectively. From Fig. 3, a), it can be seen that the porosity is markedly decreased at 135°C or lower. From Fig. 3, b) and Fig. 3, c), it can be seen that the breaking strength and the breaking extension are markedly decreased at 155°C or higher. In this case, according to the definition, $Tl = 137.5°C$ and $Tu = 152.5°C$, so that $(Tu - Tl) > 0$. Therefore, DEP is the solvent capable of forming a microporous membrane having the percolation structure defined in (B). In addition, $137.5°C \leqq Ts \leqq 152.5°C$ is a temperature range in which the percolation structure can be formed.

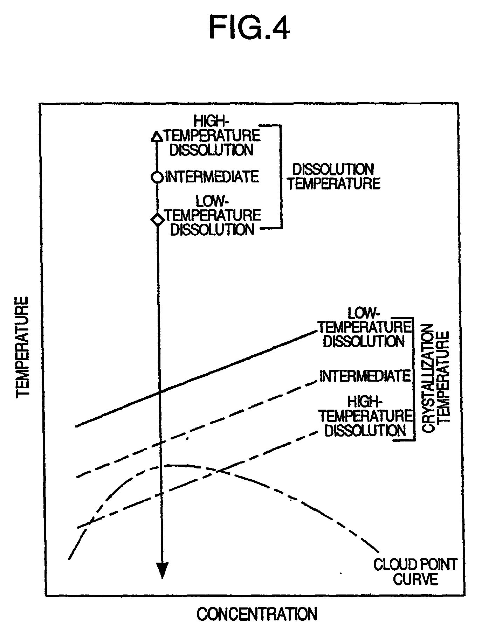

These phenomena are qualitatively explained below with reference to the schematic illustration in Fig. 4 which shows the influences of the dissolution temperature on the crystallization temperature and a cloud point curve.

Here, the cloud point curve is a curve obtained by plotting the cloud point temperature against the polymer concentration. When the cloud point temperature is not lower than the crystallization temperature, the solution is in a homogeneous one-phase state in the case where the solution temperature exceeds the cloud point temperature. By contrast, when the solution temperature is not higher than the cloud point temperature and not lower than the crystallization temperature, the solution undergoes liquid-liquid phase separation into two phases, i.e., a polymer-rich phase having a high polymer concentration and a polymer-lean phase having a low polymer concentration. When the solution is cooled to a temperature not higher than the crystallization temperature, the polymer is crystallized, so that the solution is solidified.

In Fig. 4, the axis of ordinate refers to temperature and the axis of abscissa to the concentration (for example, weight fraction) of the vinylidene fluoride homopolymer or copolymer, and the alternate long and two short dashes line is a cloud point curve. However, the cloud point curve in this case is on the low-temperature side as compared with the crystallization lines, i.e., the solidification lines, and hence is not observed in practice. On the basis of a thermodynamic reasoning by analogy, it was assumed that the cloud point curve is present in the position of the alternate long and two short dashes line. Here, the region on the low-temperature side under the cloud point curve can be considered as a two-phase separation region, as in the case of a system which undergoes liquid-liquid phase separation.

In Fig. 4, △ shows high-temperature dissolution under a condition of $Ts > Tu$, ◯ shows dissolution at a dissolution temperature Ts at which the percolation structure can be formed and which satisfies a condition of $Tl \leqq Ts \leqq Tu$ (this dissolution is expressed in the word "intermediate" in Fig. 4), and ◊ shows low-temperature dissolution under a condition of $Ts < Tl$. The alternate long and short dash line, the broken line and the solid line are crystallization lines in the case of the high-temperature dissolution, the dissolution at a dissolution temperature at which the percolation structure can be formed, and the low-temperature dissolution, respectively.

As previously described, in the case of the dissolution at a temperature lower than Tl (◊), only a non-porous material can be obtained, resulting in a markedly decreased porosity. In this case, as can be seen from Fig. 4, the cloud point curve is sufficiently on the low-temperature side as compared with the crystallization line, and it is conjectured that uniform gelation due to crystallization becomes dominant over two-phase separation, so that the non-porous material is obtained. In the case of the dissolution at a temperature higher than Tu (△), the crystallization temperature Tc is low, resulting in a coarsened structure and hence markedly deteriorated mechanical properties. In this case, as shown in Fig. 4, a part of the cloud point curve is on the high-temperature side as compared with the crystallization line, and it is conjectured that the coarsened structure is due to enhancement of the influence of two-phase separation. In the temperature range (◯) intermediate between the above two temperature ranges, the percolation structure defined in (A) is formed. As the reason for this formation, a mechanism comprising completion between gelation and liquid-liquid phase separation is thought of.

When a solvent capable of forming a microporous membrane having the percolation structure is used, a temperature range in which the percolation structure can be formed varies depending on combination of the vinylidene fluoride homopolymer or copolymer and the solvent. Even when the same vinylidene fluoride homopolymer or copolymer and the same solvent are used, the temperature range varies depending on their weight fractions. In addition, even when the same combination of the vinylidene fluoride homopolymer or copolymer and the solvent and the same weight fractions thereof are employed, the temperature range in which the percolation structure can be formed tends to shift to low temperatures in the case of dynamic formation of the microporous membrane such as membrane production by extrusion using an extruder, as compared with a relatively static formation of the microporous membrane such as membrane production using a press. That is, the temperature range in which the percolation structure can be formed varies depending also on a production process of the membrane. In the membrane production using a press, a sample obtained by heating and mixing the vinylidene fluoride homopolymer or copolymer and the solvent and cooling the mixture to room temperature, is subjected to redissolution at a constant dissolution temperature by the use of a hot press to be formed into a flat membrane or the like. In the case of such press membrane production, the temperature at the redissolution using the hot press determines whether the percolation structure is formed or not. In other words, the solution does not memorize its heat history and the final dissolution temperature determines the structure of the membrane.

Also from the fact that as shown in Fig. 3, a high porosity can be maintained while maintaining high strength and elongation, and the significance of formation of the percolation structure can be confirmed. In addition, the above-mentioned solvent is required to maintain a liquid state at a melt shaping temperature, and to be inert.

As the above-mentioned solvent capable of forming a microporous membrane having the percolation structure, there are mentioned a single solvent such as phthalic acid esters (e.g. dimethyl phthalate, diethyl phthalate, dibutyl phthalate, dioctyl phthalate, diisodecyl phthalate and tridecyl phthalate), benzoic acid esters (e.g. methyl benzoate and ethyl benzoate), sebacic acid esters (e.g. octyl sebacate), adipic acid esters (e.g. dioctyl adipate), trimellitic acid esters (e.g. trioctyl trimellitate), phosphoric esters (e.g. tributyl phosphate and tricresyl phosphate) and ketones (e.g. acetophenone), and mixed solvents thereof. In the solvents mentioned above, the alkyl groups may include their various isomers. In the present invention, there can also be used a mixed solvent obtained by mixing the above-exemplified single solvent or mixed solvent and a good solvent (e.g. acetone, tetrahydrofuran, methyl ethyl ketone, dimethylformamide, dimethylacetamide, dimethyl sulfoxide or N-methylpyrrolidone) or a non-solvent (e.g. water), and adjusting the dissolving properties so that the resulting solvent may be capable of forming a microporous membrane having the percolation structure. However, it is impossible in the present invention to use a combination of the solvent and a cooling medium which causes the replacement of the solvent with the cooling medium in a cooling bath to achieve desolvation finally. When any of the above solvents capable of forming a microporous membrane having the percolation structure are used, no planar liquid-liquid interface between a phase rich in the vinylidene fluoride homopolymer or copolymer and a phase lean in the vinylidene fluoride homopolymer or copolymer, is observed by the standing method.

The miscible resin includes methacrylic ester resins, acrylic ester resins, poly(1,4-butylene-adipate)s, poly(vinyl acetate)s, poly(vinyl-pyrrolidone)s, etc. Of these, methyl methacrylate resins and methyl methacrylate copolymers are preferably used. As the methyl methacrylate copolymers, there can be mentioned copolymers with comonomers such as methyl acrylate, styrene, α-methylstyrene, methacrylic acid, maleic anhydride, etc.

As the solvent capable of permitting the observation of planar liquid-liquid interface, there can be mentioned mixed solvents of ε-caprolactone and diethylhexyl adipate in a weight ratio of 20 : 80 to 40 : 60. No planar liquid-liquid interface is observed when the proportion of ε-caprolactone is less than 20 wt% or more than 40 wt%. The proportion of ε-caprolactone ranges preferably from 25 to 38 wt%.

When the solvent capable of forming a microporous membrane having the percolation structure is used for the dissolution by heating, the dissolution is, as described above, carried out while stirring a mixture consisting of the vinylidene fluoride homopolymer or copolymer and the solvent capable of forming a microporous membrane having the percolation structure, or a mixture consisting of the vinylidene fluoride homopolymer or copolymer, the solvent capable of forming a microporous membrane having the percolation structure, and the miscible resin, at a temperature at which the percolation structure can be formed. This temperature may be set in a range of Tl°C to Tu°C, preferably (Tl + 2)°C to (Tu - 2)°C, depending on the kinds of vinylidene fluoride homopolymer or copolymer, solvent and miscible resin used.

The concentration of the vinylidene fluoride homopolymer or copolymer in the above-mentioned mixture is 10 to 60 wt%, preferably 10 to 40 wt%, more preferably 10 to 30 wt%, though a concentration thereof at which the dissolution is possible varies depending on the dissolving properties of the solvent. When the concentration is less than 10 wt%, the viscosity of the solution is low, resulting in a low moldability and a low mechanical strength of a shaped product. On the other hand, when the concentration is more than 60 wt%, the preparation of a homogeneous solution becomes difficult and the percolation structure becomes difficult to obtain.

When the mixture consisting of the vinylidene fluoride homopolymer or copolymer, the solvent capable of forming a microporous membrane having the percolation structure, and the miscible resin, is selected to be dissolved by heating, the following additional conditions should be satisfied: the total concentration of the vinylidene fluoride homopolymer or copolymer and the miscible resin is 60 wt% or less, and the weight ratio of the vinylidene fluoride homopolymer or copolymer to the miscible resin is 40 : 60 to 90 : 10. When the total concentration of the vinylidene fluoride homopolymer or copolymer and the miscible resin is more than 60 wt%, the preparation of a homogeneous solution becomes difficult and the percolation structure becomes difficult to obtain. When the proportion of the miscible resin is more than 60 wt% based on the total weight of the vinylidene fluoride homopolymer or copolymer and the miscible resin, the crystallinity of the vinylidene fluoride homopolymer or copolymer is remarkably deteriorated, resulting in a low mechanical strength of a shaped product. By contrast, when the proportion of the miscible resin is less than 10 wt% based on the total weight of the vinylidene fluoride homopolymer or copolymer and the miscible resin, no effect of the addition of the miscible resin can be expected.

When the mixture consisting of the vinylidene fluoride homopolymer or copolymer, the solvent capable of forming a microporous membrane having the percolation structure, and the miscible resin is selected in the dissolution by heating, the production of a shaped product by the stretching described in v) or vi) results in a markedly improved water permeability. It can be speculated that the presence of the miscible resin properly reduces the crystallinity of the vinylidene fluoride homopolymer or copolymer to facilitate the production of structural defects and that the probability of the presence of pinholes is enhanced by destruction caused by the stretching.

When a mixture consisting of the vinylidene fluoride homopolymer or copolymer and a solvent capable of permitting observation of planar liquid-liquid interface is selected in the dissolution by heating, it is necessary to carry out uniform one-phase dissolution at a dissolution temperature Ts of 10°C or higher than the cloud point temperature determined by the standing method. The dissolution temperature Ts is preferably 20°C or more higher than the cloud point temperature determined by the standing method. In order to inhibit, for example, pyrolysis of the solvent and the like, the dissolution temperature Ts is preferably ((the cloud point temperature determined by the standing method) + 40°C) or lower. For example, when a mixed solvent of ε-caprolactone and diethylhexyl adipate in a weight ratio of 25 : 45 is used as the solvent capable of permitting observation of planar liquid-liquid interface, the cloud point temperature of a system consisting of a poly-(vinylidene fluoride) with a weight average molecular weight Mw of $1.18 \times 10^6$, ε-caprolactone and diethylhexyl adipate in a ratio of 30 : 25 :45 is 220°C. Therefore, the dissolution temperature Ts is preferably not higher than 260°C and not lower than 230°C.

Next, the heated solution obtained from any of the above-mentioned mixtures is shaped by extrusion through a die. The die may be properly chosen. If necessary, a hollow die, T-die, double-cylindrical inflation die, etc. can be used. When the solvent capable of forming a microporous membrane having the percolation structure is used, the extrusion temperature is properly set in a range of Tl°C to Tu°C depending on the kind of the solvent. When the solvent capable of permitting observation of planar liquid-liquid interface is used, it is preferable to set the extrusion temperature properly in a range of a temperature 10°C higher than the cloud point temperature determined by the standing method to a temperature 40°C higher than the cloud point temperature.

The solution extruded through the die is cooled to become a gel-like shaped product composed of a two-phase gel. For the cooling, the following methods, for example, can be adopted: cooling with air, cooling with a roll, and a method of bringing the solution into direct contact with a liquid cooling medium.

When a planar membrane is obtained by extruding the solution through a T-die of the like, the cooling method using air or the cooling method using a roll is often adopted. In this case, a vinylidene fluoride homopolymer or copolymer microporous membrane is obtained in which the structure of the surface layer is the same as the internal structure when observed by a scanning electron microscope, and the average pore size measured by scanning electron microscopy of the surface layer is usually the same as or larger than the average pore size measured by scanning electron microscopy of the internal structure.

When a hollow membrane is obtained by extruding the solution through a hollow die, the method of bringing the solution into direct contact with a liquid cooling medium is advantageous for stabilizing the hollow shape of section and section sizes of the membrane. In the case of the air-cooling or the cooling with a roll, the shape of section of hollow fiber is often lost because the mixture of the vinylidene fluoride homopolymer or copolymer and the solvent has a low viscosity. Also when a die other than hollow dies, such as a T-die is used, the solution can be brought into direct contact with a liquid cooling medium. In the case of the direct contact with a liquid cooling medium, the solvent capable of forming a microporous membrane having the percolation structure is preferably used as the cooling medium.

As the cooling medium which is the solvent capable of forming a microporous membrane having the percolation structure, there are mentioned a single cooling medium such as phthalic acid esters (e.g. dimethyl phthalate, diethyl phthalate, dibutyl phthalate, dioctyl phthalate and diisodecyl phthalate), benzoic acid esters (e.g. methyl benzoate and ethyl benzoate), sebacic acid esters (e.g. octyl sebacate), adipic acid esters (e.g. dioctyl adipate), trimellitic acid esters (e.g. trioctyl trimellitate), phasphoric esters (e.g. tributyl phosphate and tricresyl phosphate) and ketones (e.g. acetophenone), and mixed cooling media thereof. In the cooling media mentioned above, the alkyl groups may include their various isomers. In the present invention, there can also be used as the cooling medium a mixed solvent obtained by mixing the above-exemplified single cooling medium or mixed cooling medium and a good solvent (e.g. acetone, tetrahydrofuran, methyl ethyl ketone, dimethylformamide, dimethylacetamide, dimethyl sulfoxide or N-methylpyrrolidone) or a non-solvent (e.g. water), and adjusting the dissolving properties so that the resulting solvent may be capable of forming a microporous membrane having the percolation structure. However, as described in the explanation of the solvent, it is impossible in the present invention to use a combination of the solvent and the cooling medium which causes the replacement of the solvent with the cooling medium in a cooling bath to achieve desolvation finally.

The cooling temperature is preferably (Tm - 50°C) or lower. Here, Tm is the melting point of the vinylidene fluoride homopolymer or copolymer in the mixture of the vinylidene fluoride homopolymer or copolymer and the solvent. The melting point Tm becomes lower with a decrease in the concentration of the vinylidene fluoride homopolymer or copolymer (melting point lowering phenomenon).

When a cooling medium having a low affinity for the vinylidene fluoride homopolymer or copolymer is used, the surface layer of the resulting vinylidene fluoride homopolymer or copolymer microporous membrane has a skin-like structure or an assembly structure formed of a granular material, so that the porosity of the surface is decreased in some cases. As described above, the average pore size of the surface layer can be increased by properly selecting the cooling medium.

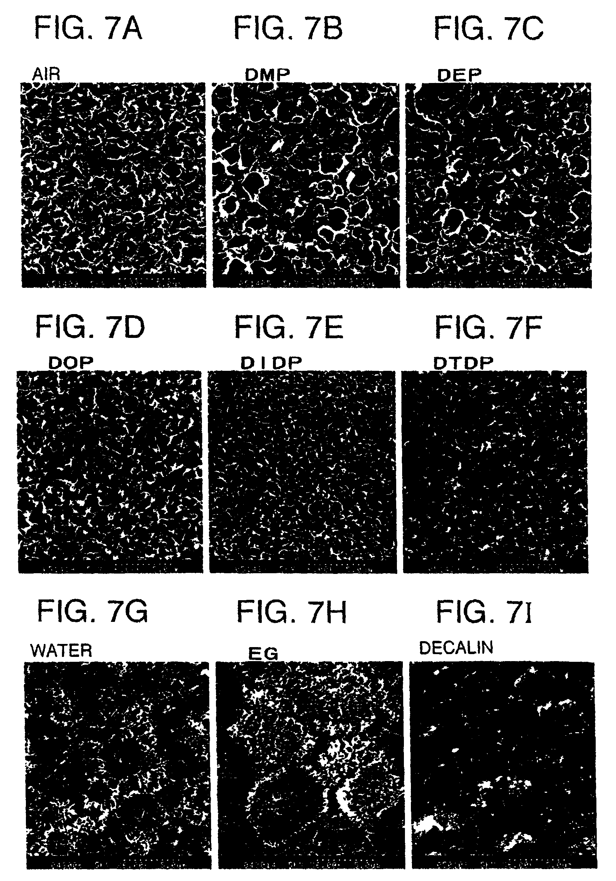

Figs. 7A to 7I show scanning electron micrographs of the surfaces, respectively, of poly(vinylidene fluoride) microporous membranes obtained by using various cooling media. For example, when the cooling medium is dimethyl phthalate (DMP), diethyl phthalate (DEP) or diethylhexyl phthalate (DOP), the average pore size measured by scanning electron microscopy (SEM average pore size) of the surface layer is larger than SEM average pore size of the internal structure. It is considered that the average pore size of the surface layer is determined by the affinity of the cooling medium for the vinylidene fluoride homopolymer or copolymer. In the case where $Tm_{100} > Tm_{30}$ wherein $Tm_{100}$ is the melting point of the vinylidene fluoride homopolymer or copolymer in DSC and $Tm_{30}$ is the melting point in DSC of a mixture of the vinylidene fluoride homopolymer or copolymer and any liquid in a ratio of 30 : 70, it may be judged that the system consisting of the vinylidene fluoride homopolymer or copolymer, and the liquid shows a lowering of melting point. It is considered that in such a system which shows a lowering of melting point, the affinity of the liquid for the vinylidene fluoride homopolymer or copolymer is high. When the cooling medium is used as such a liquid having a high affinity for the vinylidene fluoride homopolymer or copolymer, the following relation tends to hold:

(the average pore size measured by scanning electron microscopy of the surface layer) > (the average pore size measured by scanning electron microscopy of the internal structure)

In other words, it is sufficient that a solvent capable of causing the melting point lowering phenomenon in the case of the vinylidene fluoride homopolymer or copolymer is used as the cooling medium. However, when the affinity is too high, the membrane surface is dissolved to become non-porous. In order to avoid the formation of the non-porous surface due to the dissolution, it is necessary to use a cooling medium which satisfies a condition of $Tm_{30} > 100°C$.

As shown in Figs. 7A to 7I, when the cooling medium is diisodecyl phthalate (DIDP), tridecyl phathalate (DTDP), water, ethylene glycol, decalin or the like, the following relation holds:

(the SEM average pore size of the surface layer) < (the SEM average pore size of the internal structure)

Particularly when DTDP, decalin or the like is used, the membrane surface becomes non-porous. Even in such a case, it is possible to establish the following relation:

(the average pore size measured by scanning electron microscopy of the surface layer) > (the average pore size measured by scanning electron microscopy of the internal structure)

by forming pores with a diameter of about 1 μm in the case of approximation to round pores by carrying out stretching with a stretching residual strain of 100% or less before or after removing the solvent by the use of a volatile liquid. The stretching is more effective when conducted after extracting the solvent.

The gel-like shaped product obtained is washed with a volatile liquid miscible with the solvent to be freed of the solvent. As the volatile liquid for the washing, there can be used, for example, hydrocarbons such as pentane, hexane, heptane, etc.; chlorinated hydrocarbons such as methylene chloride, carbon tetrachloride, etc.; fluorinated hydrocarbons such as ethane trifluoride, etc.; ethers such as methyl ethyl ether, diethyl ether, etc.; and ketones such as acetone, methyl ethyl ketone, etc. The volatile liquids mentioned above are properly selected depending on the kind of the solvent used, and are used singly or as a mixture thereof. The washing can be conducted, for example, by a method comprising immersion in the volatile liquid followed by extraction, a method comprising showering the volatile liquid, or a combination thereof. When the mixture consisting of the vinylidene fluoride homopolymer or copolymer, the solvent capable of forming a microporous membrane having the percolation structure and the miscible solvent is selected, it is preferable to use a volatile liquid with which the solvent and the miscible resin can be washed away at the same time.

Then, the microporous membrane is dried. As a method for drying the microporous membrane, there are mentioned methods such as drying by heating, air-drying with hot air, or contacting with a heating roll.

For the purpose of improving the surface porosity of the microporous membrane, namely, for the purpose of increasing the average pore size measured by scanning electron microscopy of the surface layer, increasing the probability of the presence of throughholes, and increasing the breaking strength, the gel-like shaped product or the microporous membrane, or both, can be stretched with a stretching residual strain of 0 to 100%, preferably 10 to 100%, at such a draw ratio that the above-mentioned structural characteristics of the microporous membrane are retained. The stretching of the gel-like shaped product or the microporous membrane is conducted at a predetermined ratio by a conventional tenter method, roll method, rolling method, or a combination thereof. The stretching may be either uniaxial stretching or biaxial stretching. The biaxial stretching may be either simultaneous or sequential lengthwise-and-crosswise stretchings. In the case of the uniaxial stretching, the term "stretching residual strain" used here means the percentage of an increment in the length of a specimen given by the stretching, based on the length of the specimen before the stretching (the original length). In the case of the biaxial stretching, the term means the percentage of an increment in the area of a membrane given by the stretching, based on the area of the membrane before the stretching (the original area). For limiting the stretching residual strain to 100% or less, the draw ratio is 3 or less in the case of the uniaxial stretching, and the draw ratio is 4 or less in terms of area ratio in the case of the biaxial stretching, though these ratios vary depending on conditions. The stretching temperature for the gel-like shaped product or the microporous membrane is 50°C or lower, preferably 25°C or lower. When the stretching temperature is higher than 50°C, the stretching is not sufficiently effective.

When the gel-like shaped product is stretched, the solvent is removed by the above-mentioned method after the stretching, and the microporous membrane is dried.

The microporous membrane thus obtained can be heat-treated, for example, for attaining dimensional stability. The heat-treatment temperature can be set at any temperature not higher than (the melting temperature of the vinylidene fluoride resin - 20°C) and not lower than 50°C.

If necessary, the microporous membrane obtained can be made hydrophilic by alkali treatment, plasma irradiation, electron beam irradiation, γ-ray irradiation, corona treatment, impregnation with a surfactant, surface graft, coating, or the like.

In addition, if necessary, the gel-like shaped product or the microporous membrane can be subjected to crosslinking by electron beam irradiation, γ-ray irradiation or the like.

The produced microporous membrane preferably has a porosity of not more than 90% and not less than 30%, more preferably not more than 80% and not less than 50%, a breaking strength of 50 Kgf/cm$^2$ or more, more preferably 70 to 500 Kgf/cm$^2$, a breaking extension of 150% or more, more preferably 200 to 800%, a bubble point measured by the bubble point method of 1 to 20 Kgf/cm$^2$, and a water permeability of 200 to 10,000 liters/m$^2$ · hr · atm. Although the thickness of the microporous membrane of the present invention can be properly chosen depending on purposes, it is usually 20 to 1,000 μm, preferably 60 to 800 μm.

The microporous membrane of the present invention and the gel-like shaped product composed of a two-phase gel of the present invention obtained in the production process of the microporous membrane can be used as a precursor of an electrolyte support for a solid electrolyte battery obtained by introducing an electrolytic solution into the microporous membrane or replacing the solvent in the gel-like shaped product with an electrolytic solution.

Measurement items and measuring methods employed in the present invention are as follows:

(1) Molecular weight and molecular weight distribution: Weight average molecular weight Mw in terms of polystyrene is measured by GPC. GPC measuring apparatus; that manufactured by Tosoh Ltd., column; GMHXL, solvent; DMF, column temperature; 40°C.

(2) Observation of the structure of the surface layer of a microporous membrane and its internal structure: The structure of surface layer of each microporous membrane and its internal structure are observed by the use of a scanning electron microscope SEM (S-800A, mfd. by Hitachi Ltd.). Here, the term "internal structure" means the structure of a section obtained by severing the microporous membrane after freezing which is observed from a direction perpendicular to the section.

(3) Average pore size (μm) measured by scanning electron microscopy: On a scanning electron micrograph of the surface or a section of each microporous membrane, 50 parallel straight lines are drawn with an image processor (IP-1000PC, mfd. by Asahi Kasei Kogyo K.K.), and the average length of segments inside voids of straight lines passing the voids is taken as the average pore size. The magnification and the area of region were set so that any of the lines might cross at least 10 voids. In the present invention, there is utilized a 16 μm (length) x 16 μm (width) region in the photograph taken through an electron microscope of 6000 magnifications, unless otherwise specified.

(4) Thickness (μm) of a microporous membrane: The average of arbitrarily selected 5 or mote section thickness values of each microporous membrane observed by SEM is taken as the thickness of the microporous membrane.

(5) Average pore size (μm) (half-dry method): Measured by the use of ethanol according to ASTM F316-86. In Examples and Comparative Examples, the simple words "average pore size" mean an average pore size measured by this method.

(6) Maximum pore size (μm) (bubble point method): Measured by the use of ethanol according to ASTM F316-86 and E128-61.

(7) Porosity (%): Porosity = (volume of voids / volume of microporous membrane) x 100 .

(8) Breaking strength (Kgf/cm$^2$) and breaking extension (%): Measured for a hollow fiber type specimen or a strip specimen of 10 mm in width according to ASTM D882.

(9) Water permeability (liters/m$^2$ · hr · atm): Measured by the use of pure water at 25°C and at a differential pressure of 1 Kgf/cm$^2$.

(10) Stretching residual strain (%): Stretching residual strain = ((specimen length after stretching - original length) / original length) x 100

(11) Melting point Tm (°C): A mixture of a vinylidene fluoride homopolymer or copolymer and a solvent is sealed up in a sealed type DSC container, and a melting peak temperature measured by the use of DSC-200 manufactured by Seiko Denshi Co., Ltd. (heating rate 5°C/min) is taken as the melting point.

(12) Crystallization temperature Tc (°C): A mixture of a vinylidene fluoride homopolymer or copolymer and a solvent is sealed up in a sealed type DSC container, heated to a dissolution temperature Ts at a heating rate of 5°C/min by the use of DSC-200 manufactured by Seiko Denshi Co., Ltd., maintained at this temperature for 20 minutes, and then cooled at a cooling rate of 2°C/min. A crystallization peak temperature observed during the cooling is taken as the crystallization temperature.

(13) Ionic conductivity (mS/cm): A sheet-like electrolyte support is held between metal electrodes (stainless steel sheets) to form an electrochemical cell. By employing an alternating-current impedance method comprising applying an alternating current between the electrodes and measuring the resistance component, the impedance is measured with Impedance Meter Model 389 manufactured by EG & G Co., Ltd. The ionic conductivity is calculated from a real-number impedance intercept in a Cole-Cole plot.

The present invention is concretely explained with the following examples.

Example 1

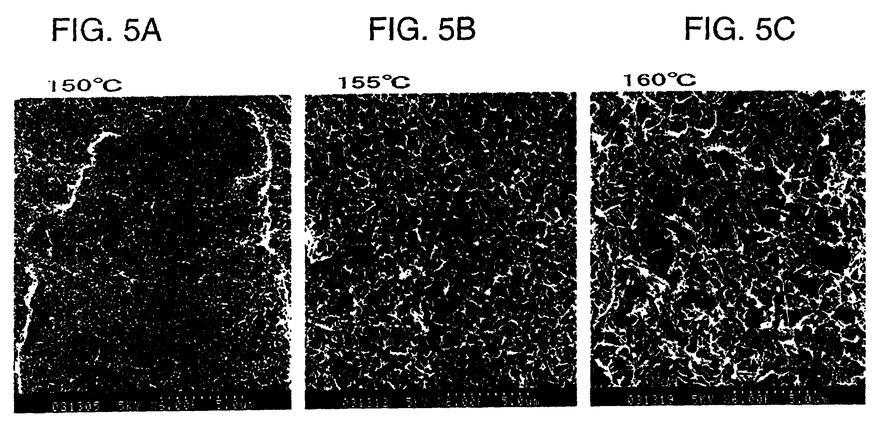

40 Parts by weight of a vinylidene fluoride homopolymer having a weight average molecular weight (Mw) of $3.62 \times 10^5$ and 60 parts by weight of diethyl phthalate (DEP) were mixed with heating at 160°C in a twin-rotor kneader and then cooled to room temperature. The resulting sample was subjected to redissolution to be shaped into a flat membrane of 100 μm at 155°C with a hot pressing machine, and then cooled with a pressing machine at 20°C to obtain a sheet-like and gel-like shaped product. The gel-like shaped product obtained by the shaping was immersed in methylene chloride for 1 hour to extract DEP, and the residue was dried at room temperature to obtain a microporous membrane. The average pore size of this membrane was 0.1 μm, and a photograph of the internal structure of the membrane is shown in Fig. 5B. The membrane was uniaxially stretched at a draw ratio of 150% at 20°C, followed by relaxation at 20°C. In this case, the stretching residual strain was 20%. The ratio of the maximum pore size measured by the bubble point method to the average pore size measured by the half-dry method was 2.0 or less, and the internal structure of the oriented film obtained was the percolation structure.

Example 2

The process of Example 1 was repeated except for conducting the shaping at 160°C with a pressing machine. The average pore size of the resulting membrane was 0.15 μm, and a photograph of the internal structure of the membrane is shown in Fig. 5C. The stretching residual strain of the resulting oriented film was 30%. The ratio of the maximum pore size measured by the bubble point method to the average pore size measured by the half-dry method was 2.0 or less, and the internal structure was the percolation structure.

Comparative Example 1

The process of Example 1 was repeated except for conducting the shaping at 150°C with a pressing machine. The internal structure of the resulting membrane was non-porous as shown in Fig. 5A.

Example 3

The process of Example 1 was repeated except for using 70 parts by weight of acetophenone in place of 60 parts by weight of DEP, conducting the kneading at 140°C, and conducting the shaping at 140°C with a pressing machine. The average pore size of the resulting membrane was 0.15 μm. The ratio of the maximum pore size measured by the bubble point method to the average pore size measured by the half-dry method was 2.0 or less, and the internal structure was the percolation structure.

Example 4

The process of Example 1 was repeated except for using 70 parts by weight of dibutyl phthalate (DBP) in place of 60 parts by weight of DEP, conducting the kneading at 165°C, and conducting the shaping at 165°C with a pressing machine. The average pore size of the resulting membrane was 0.15 μm. The ratio of the maximum pore size measured by the bubble point method to the average pore size measured by the half-dry method was 2.0 or less, and the internal structure was the percolation structure.

Comparative Example 2

The process of Example 1 was repeated except for using 55 parts by weight of γ-butyrolactone (γ-BL) in place of 60 parts by weight of DEP, conducting the kneading at 120°C, and conducting the shaping at 120°C with a pressing machine. The internal structure of the resulting membrane is a structure composed of connected spherical particles as shown in Fig. 6A.

Comparative Example 3

The process of Comparative Example 2 was repeated except for using ethylene carbonate (EC) in place of γ-BL, conducting the kneading at 150°C, and conducting the shaping at 150°C with a pressing machine. The internal structure of the resulting membrane is a structure composed of connected spherical particles as shown in Fig. 6B.

Comparative Example 4

The process of Comparative Example 3 was repeated except for using propylene carbonate (PC) in place of EC. The internal structure of the resulting membrane is a structure composed of connected spherical particles as shown in Fig. 6C.

Example 5

A gel-like shaped product obtained by repeating the process of Example 1 except for changing the amount of DEP to 70 parts by weight was subjected to redissolution on a hot plate at 160°C, cooled with air at 20°C, and uninterruptedly immersed in methylene chloride for 1 hour to extract DEP, and the residue was dried at room temperature to obtain a microporous membrane. The average pore size of this membrane was 0.1 μm and its surface was porous as shown in Fig. 7A. The average pore size measured by scanning electron microscopy of the surface layer of the membrane was 1.2 times the average pore size measured by scanning electron microscopy of the internal structure. The ratio of the maximum pore size measured by the bubble point method to the average pore size measured by the half-dry method was 2.0 or less, and the internal structure was the percolation structure.

Example 6

The process of Example 5 was repeated except for conducting the cooling in a cooling medium at 20°C. As the cooling medium, there was used each of dimethyl phthalate (DMP), DEP, diethylhexyl phthalate (DOP), diisodecyl phthalate (DIDP), water and ethylene glycol (EG). The surfaces of the membranes obtained by using each of DMP, DEP, DOP, DIDP, water and EG were porous as shown in Figs. 7B, 7C, 7D, 7E, 7G and 7H, respectively. The average pore sizes measured by scanning electron microscopy of the surface layers of the membranes shown in Figs. 7B, 7C, 7D, 7E, 7G and 7H were 2.0 times, 1.5 times, 1.2 times, 1.0 times, 0.8 times and 0.5 times, respectively, as large as the average pore sizes measured by scanning electron microscopy of the internal structures, respectively, of the membranes. As for Figs. 7G and 7H, the average pore sizes of the membranes were measured after removing the surface skin layers of the membranes by utilizing the adhesive strength of an adhesive tape. The average pore sizes of the membranes shown in Figs. 7B, 7C, 7D and 7E are about 0.1 MM, and the average pore sizes of the membranes shown in Figs. 7G and 7H were about 0.04 MM. The ratio of the maximum pore size measured by the bubble point method to the average pore size measured by the half-dry method was 2.0 or less for all the membranes, and the internal structure of each membrane was the percolation structure.

Comparative Example 5

The process of Example 5 was repeated except for conducting the cooling in a cooling medium at 20°C. As the cooling medium, each of tridecyl phthalate (DTDP) and decalin was used. The surfaces of the membranes obtained by using each of DTDP and decalin were non-porous as shown in Fig. 7F and 7I, respectively. The ratio of the maximum pore size measured by the bubble point method to the average pore size measured by the half-dry method after removing the surface skin layers of the membranes by utilizing the adhesive strength of an adhesive tape was 2.0 or less for the two membranes, and the internal structure of each membrane was the percolation structure.

Example 7

A mixture of 46.6 parts by weight of PVdF having a Mw of $3.62 \times 10^5$ and 53.4 parts by weight of DEP was kneaded with heating at 145°C by means of a 35 mm∅ twin-screw extruder and extruded into a hollow fiber through a hollow die with an inside diameter of 0.9 mm∅ and an outside diameter of 1.7 mm∅. In this case, in order to stabilize the diameter of the hollow fiber, air was allowed to flow inside the fiber at a rate of 10 ml/min, and the extruded hollow fiber was cooled by immersion in a cooling medium bath of DOP to obtain a gel-like shaped product. The hollow fiber type gel obtained by the above shaping was immersed in methylene chloride for 1 hour to extract DEP, and the residue was dried at room temperature to obtain a hollow fiber membrane. The hollow fiber membrane obtained had an inside diameter of 0.84 mm, an outside diameter of 1.59 mm, a porosity of 54.6%, an average pore size of 0.14 $\mu$m and a maximum pore size of 0.21 $\mu$m. The ratio of the maximum pore size to the average pore size was 1.50. The hollow fiber membrane had a water permeability of 300 liters/ $m^2$ · hr · atm, a breaking strength of 139 Kgf/cm$^2$, and a breaking extension of 353%. The internal structure of this membrane was the percolation structure.

Example 8

The process of Example 7 was repeated except for conducting the kneading with heating at 150°C. The resulting hollow fiber membrane had an inside diameter of 0.88 mm, an outside diameter of 1.62 mm, a porosity of 54.3%, an average pore size of 0.15 $\mu$m and a maximum pore size of 0.26 $\mu$m. The ratio of the maximum pore size to the average pore size was 1.73. The hollow fiber membrane had a water permeability of 350 liters/ $m^2$ · hr · atm, a breaking strength of 122 Kgf/cm$^2$, and a breaking extension of 290%. The internal structure of this membrane was the percolation structure.

Example 9

The process of Example 7 was repeated except for conducting the kneading with heating at 140°C. The resulting hollow fiber membrane had an inside diameter of 0.86 mm, an outside diameter of 1.61 mm, a porosity of 54.0%, an average pore size of 0.12 $\mu$m and a maximum pore size of 0.17 $\mu$m. The ratio of the maximum pore size to the average pore size was 1.42. The hollow fiber membrane had a water permeability of 250 liters/ $m^2$ · hr · atm, a breaking strength of 156 Kgf/cm$^2$, and a breaking extension of 400%. The internal structure of this membrane was the percolation structure.

Comparative Example 7

The process of Example 7 was repeated except for conducting the kneading with heating at 130°C. The resulting hollow fiber membrane had an inside diameter of 0.85 mm, an outside diameter of 1.60 mm and a low porosity of 42.0%, and was a shrunk membrane as a whole. Its internal structure comprised very fine pores almost all of which were independent pores, and the water permeability was zero. The hollow fiber membrane had a breaking strength of 150 Kgf/cm$^2$ and a breaking extension of 380%.

Comparative Example 8

The process of Example 7 was repeated except for conducting the kneading with heating at 155°C. The resulting hollow fiber membrane had an inside diameter of 0.81 mm, an outside diameter of 1.58 mm, a porosity of 52.9%, an average pore size of 0.18 $\mu$m and a maximum pore size of 0.53 $\mu$m. The ratio of the maximum pore size to the average pore size was 2.94. The hollow fiber membrane had a water permeability of 500 liters/ $m^2$ · hr · atm, a breaking strength of 90 Kgf/cm$^2$, and a breaking extension of 90%. The internal structure of this membrane was coarse.

Comparative Example 9

The process of Example 7 was repeated except for conducting the kneading with heating at 160°C. The resulting hollow fiber membrane had an inside diameter of 0.82 mm, an outside diameter of 1.58 mm, a porosity of 53.5%, an average pore size of 0.20 $\mu$m and a maximum pore size of 0.79 $\mu$m. The ratio of the maximum pore size to the average pore size was 3.95. The hollow fiber membrane had a water permeability of 810 liters/ $m^2$ · hr · atm, a breaking strength of 82 Kgf/cm$^2$, and a breaking extension of 75%. The internal structure of this membrane was coarse.

Example 10

The process of Example 7 was repeated except for kneading a mixture of 30 parts by weight of PVdF having a Mw of $5.46 \times 10^5$ and 70 parts by weight of DEP with heating at 145°C. The resulting hollow fiber membrane had an inside diameter of 0.85 mm, an outside diameter of 1.60 mm, a porosity of 69.1%, an average pore size of 0.18 $\mu$m and

a maximum pore size of 0.23 μm. The ratio of the maximum pore size to the average pore size was 1.27. The hollow fiber membrane had a water permeability of 2900 liters/ $m^2$ • hr • atm, a breaking strength of 93 Kgf/$cm^2$, and a breaking extension of 433%. The internal structure of this membrane was the percolation structure.

Example 11

The process of Example 10 was repeated except for conducting the kneading with heating at 150°C. The resulting hollow fiber membrane had an inside diameter of 0.85 mm, an outside diameter of 1.58 mm, a porosity of 68.8%, an average pore size of 0.44 μm and a maximum pore size of 0.67 μm. The ratio of the maximum pore size to the average pore size was 1.52. The hollow fiber membrane had a water permeability of 8200 liters/ $m^2$ • hr • atm, a breaking strength of 88 Kgf/$cm^2$, and a breaking extension of 425%. The internal structure of this membrane was the percolation structure.

Example 12

The process of Example 9 was repeated except for using DMP in place of DEP. The resulting hollow fiber membrane had an inside diameter of 0.85 mm, an outside diameter of 1.53 mm, a porosity of 67.0%, an average pore size of 0.34 μm and a maximum pore size of 0.49 μm. The ratio of the maximum pore size to the average pore size was 1.43. The hollow fiber membrane had a water permeability of 4300 liters/ $m^2$ • hr • atm, a breaking strength of 95 Kgf/$cm^2$, and a breaking extension of 292%. The internal structure of this membrane was the percolation structure.

Example 13

A sheet-like and gel-like shaped product of about 100 μm in thickness was obtained by repeating the process of Example 1 except for using 60 parts by weight of DMP in place of 60 parts by weight of DEP and conducting the shaping at 150°C with a hot pressing machine. The gel-like shaped product obtained by the shaping was immersed in ether for several hours to extract DMP, and the residue was dried at room temperature to obtain a microporous membrane. This membrane had an average pore size of 0.12 μm, a porosity of 56%, a thickness of 87 μm, a breaking strength of 120 Kgf/$cm^2$, and a breaking extension of 300%. The ratio of the maximum pore size measured by the bubble point method to the average pore size measured by the half-dry method was 2.0 or less, and the internal structure was the percolation structure. The above-mentioned microporous membrane was immersed in a 1 mol/liter solution of $LiBF_4$ in a 1 : 1 mixture of EC and PC at room temperature to produce a sheet-like electrolyte support of 100 μm in thickness.
Impedance was measured for the aforesaid sheet- like electrolyte support to find that the ionic conductivity at room temperature was 0.8 mS/cm.

Example 14

A microporous membrane was obtained by repeating the process of Example 13 except for changing the amount of DMP to 70 parts by weight. The microporous membrane obtained had an average pore size of 0.25 μm, a porosity of 63%, a thickness of 62 μm, a breaking strength of 100 Kgf/$cm^2$, and a breaking extension of 270%. The ratio of the maximum pore size measured by the bubble point method to the average pore size measured by the half-dry method was 2.0 or less, and the internal structure was the percolation structure. A sheet-like electrolyte support of 80 μm in thickness was produced in the same manner as in Example 13. The ionic conductivity of the sheet-like electrolyte support at room temperature was 1.1 mS/cm.

Comparative Example 10

A microporous membrane was obtained by repeating the process of Example 13 except for using EC in place of DMP. The microporous membrane obtained had a porosity of 43% and a thickness of 76 μm, and its internal structure was a structure composed of connected spherical particles. A sheet-like electrolyte support of 70 μm in thickness was produced in the same manner as in Example 13. The ionic conductivity of the sheet-like electrolyte support at room temperature was 0.3 mS/cm.

Example 15

The process of Example 7 was repeated except for kneading a mixture of 25 parts by weight of PVdF having a Mw of 1.18 x $10^6$ and 75 parts by weight of DMP with heating at 135°C, extruding the mixture through a hollow die with an inside diameter of 0.9 mm∅ and an outside diameter of 1.45 mm∅, controlling the temperature of the cooling medium bath of DOP at 20°C, and using methyl ethyl ketone for extracting DMP. The resulting hollow fiber membrane had an inside diameter of 0.75 mm, an outside diameter of 1.25 mm, a porosity of 69.8%, an average pore size of 0.17 μm and a maximum pore size of 0.22 μm. The ratio of the maximum pore size to the average pore size was 1.22. The hollow fiber membrane had a water permeability of 2200 liters/ $m^2$ • hr • atm, a breaking strength of 115 Kgf/$cm^2$, and a breaking extension of 371%. The internal structure of this membrane was the percolation structure.

Example 16

The hollow fiber membrane obtained in Example 15 was stretched with a stretching elongation of 50%. The resulting hollow fiber membrane had a stretching residual strain of 28%, an inside diameter of 0.72 mm, an outside diameter of 1.22 mm, a porosity of 73.0%, an average pore size of 0.18 μm and a maximum pore size of 0.24 μm. The ratio of the maximum pore size to the average pore size was 1.33. This hollow fiber membrane had a water permeability of 2800 liters/ $m^2$ • hr • atm, a breaking strength of 107 Kgf/$cm^2$, and a breaking extension of 321%. The internal structure of this membrane was the percolation structure.

Example 17

The process of Example 7 was repeated except for kneading a mixture of 24 parts by weight of PVdF having a Mw of 5.46 x $10^5$, 8 parts by weight of an acrylic resin (PMMA, Delpet 80N, mfd. by Asahi Kasei Kogyo K.K.) and 68 parts by weight of DEP with heating at 145°C, and using a cooling medium bath of DBP. The resulting dried membrane was stretched with a stretching elongation of 50%. Thus obtained, the hollow fiber membrane had a stretching residual strain of 29%, an inside diameter of 0.85 mm, an outside diameter of 1.60 mm, a porosity of 69.1%, an average pore size of 0.18 μm and a maximum pore size of 0.23 μm. The ratio of the maximum pore size to the average pore size was 1.27. The hollow fiber membrane had a water permeability of 3500 liters/ $m^2$ • hr • atm, a breaking strength of 93 Kgf/$cm^2$, and a breaking extension of 433%. The internal structure of this membrane was the percolation structure.

Example 18

The process of Example 15 was repeated except for kneading a mixture of 25 parts by weight of PVdF having a Mw of 1.18 x $10^6$, 5 parts by weight of an acrylic resin (PMMA, Delpet 80N, mfd. by Asahi Kasei Kogyo K.K.) and 70 parts by weight of DMP with heating at 137.5°C, and controlling the temperature of a cooling medium bath of DBP at 20°C. The resulting hollow fiber membrane had an inside diameter of 0.69 mm, an outside diameter of 1.25 mm, a porosity of 69.3%, an average pore size of 0.13 μm and a maximum pore size of 0.16 μm. The ratio of the maximum pore size to the average pore size was 1.23. The hollow fiber membrane had a water permeability of 1,900 liters/ $m^2$ • hr • atm, a breaking strength of 102 Kgf/$cm^2$, and a breaking extension of 439%. The internal structure of this membrane was the percolation structure.

Example 19

The hollow fiber membrane obtained in Example 18 was stretched with a stretching elongation of 50%. The resulting hollow fiber membrane had a stretching residual strain of 26%, an inside diameter of 0.68 mm, an outside diameter of 1.23 mm, a porosity of 72.0%, an average pore size of 0.18 μm and a maximum pore size of 0.24 μm. The ratio of the maximum pore size to the average pore size was 1.33. This hollow fiber membrane had a water permeability of 2,900 liters/ $m^2$ • hr • atm, a breaking strength of 99 Kgf/$cm^2$, and a breaking extension of 376%. The internal structure of this membrane was the percolation structure.

Example 20

The process of Example 15 was repeated except for kneading a mixture of 35 parts by weight of PVdF having a Mw of 1.18 x $10^6$ and 65 parts by weight of DMP with heating at 145°C, and controlling the temperature of the cooling medium bath of DOP at 0°C. The resulting hollow fiber membrane had an inside diameter of 0.75 mm ∅, an outside diameter of 1.30 mm∅, a porosity of 61.0%, an average pore size of 0.05 μm and a maximum pore size of 0.07 μm. The ratio of the maximum pore size to the average pore size was 1.40. The hollow fiber membrane had a water permeability of 500 liters/ $m^2$ • hr • atm, a breaking strength of 120 Kgf/$cm^2$, and a breaking extension of 400%. The internal structure of this membrane was the percolation structure. The average pore size measured by scanning electron microscopy of the surface layer of the membrane was 1.2 times the average pore size measured by scanning electron microscopy of the internal structure.

Example 21

The process of Example 15 was repeated except for kneading a mixture of 30 parts by weight of PVdF having a Mw of 1.18 x $10^6$ and 70 parts by weight of a mixed solvent of ε-caprolactone and diethylhexyl adipate (25 : 45 by weight) with heating at 245°C, and controlling the temperature of the cooling medium bath of DOP at 10°C. The resulting hollow fiber membrane had an inside diameter of 0.74 mm∅, an outside diameter of 1.26 mm∅, a porosity of 71.0%, an average pore size of 0.15 μm and a maximum pore size of 0.24 μm. The ratio of the maximum pore size to the average pore size was 1.60. The water permeability of the hollow fiber membrane was 2,400 liters/ $m^2$ • hr • atm. The hollow fiber membrane had a breaking strength of 105 Kgf/$cm^2$ and a breaking extension of 360%. The internal structure of this membrane was the percolation structure. The cloud point temperature of the system described above was 220°C as determined by the standing method. In addition, after the system was allowed to stand at 200°C or 180°C for 15 hours, a clear planar interface between a PVdF-rich phase and a PVdF-lean phase was observed. This fact indicates that the mixed solvent of ε-caprolactone and diethylhexyl adipate (25 : 45 by weight) is "the solvent capable of permitting observation of planar liquid-liquid interface" used in the present invention.

Example 22

The process of Example 15 was repeated except for kneading a mixture of 40 parts by weight of PVdF having a Mw of 1.18 x $10^6$ and 60 parts by weight of a mixed solvent of ε-caprolactone and diethylhexyl adipate (25 : 45 by weight) with heating at 250°C, and controlling the temperature of the cooling medium bath of DOP at 0°C. The resulting hollow fiber membrane had an inside diameter of 0.73 mm∅, an outside diameter of 1.31 mm∅, a porosity of 62.0%, an average pore size of 0.04 μm and a maximum pore size of 0.06 μm. The ratio of the maximum pore size to the average pore size was 1.50. The hollow fiber membrane had a water permeability of 550 liters/ $m^2$ • hr • atm, a breaking strength of 115 Kgf/$cm^2$, and a breaking extension of 380%. The internal structure of this membrane was the percolation structure. The average pore size measured by scanning electron microscopy of the surface layer of the membrane was 1.5 times the average pore size measured by scanning electron microscopy of the internal structure.

Comparative Example 11

The process of Example 10 was repeated except for kneading a mixture of 27 parts by weight of PVdF having a Mw of 5.46 x $10^5$ and 73 parts by weight of a mixed solvent of ε-caprolactone, γ-butyrolactone and dioctyl adipate (18.75 : 18.75 : 62.5 by weight) with heating at 185°C, and using water controlled at 20°Cas a cooling medium in place of DOP. The resulting hollow fiber membrane had an average pore size of 0.16 μm and a maximum pore size of 0.51 μm. The ratio of the maximum pore size to the average pore size was 3.19, and the structure of this membrane was coarse. The breaking extension of the membrane was 76%.

INDUSTRIAL APPLICABILITY

The microporous membrane of the present invention has a homogeneous structure, is excellent in permeability to a fluid, separation properties in separating fine particles from the fluid, mechanical properties and chemical resistance, and is suitably used as various filters including virus-removing filters, microfiltration membranes, ultrafiltration membranes, separators for battery, diaphragms for electrolytic capacitor, electrolyte supports for solid electrolyte battery, etc.

**Claims**

1.   A microporous membrane produced by cooling a solution comprising a vinylidene fluoride homopolymer or copolymer having a weight average molecular weight of 1 x $10^5$ or more and a solvent therefor, to form a two-phase gel, said microporous membrane comprising a polymer phase comprising said vinylidene fluoride homopolymer or copolymer, and intercommunicating voids which have an average pore size measured by the half-dry method of 0.005 to 5 μm and extend from one side of the membrane to the other side, and said microporous membrane having the percolation structure defined in (A) below, as its internal structure:

     (A) a structure in which the polymer phase forms an isotropic network structure by three-dimensional branching in arbitrary directions, the voids are formed within an area surrounded by said polymer phase of the network structure and intercommunicate with one another, and the ratio of the maximum pore size measured by the bubble point method to the average pore size measured by the half-dry method is 2.0 or less.

2. The microporous membrane according to claim 1, wherein the average pore size measured by scanning electron microscopy of the surface layer on at least one side of the microporous membrane is the same as or larger than the average pore size measured by scanning electron microscopy of the internal structure.

3. The microporous membrane according to claim 1, wherein the average pore size measured by scanning electron microscopy of the surface layer on at least one side of the microporous membrane is smaller than the average pore size measured by scanning electron microscopy of the internal structure.

4. The microporous membrane according to claim 1, wherein the average pore size measured by the half-dry method is 0.005 to 0.1 $\mu$m.

5. A process for producing a microporous membrane which comprises using a vinylidene fluoride homopolymer or copolymer having a weight average molecular weight of $1 \times 10^5$ or more and a solvent capable of forming a microporous membrane having a percolation structure as defined in (B) below, in a weight ratio of 10 : 90 to 60 : 40; dissolving said vinylidene fluoride homopolymer or copolymer in said solvent at a dissolution temperature Ts at which the percolation structure can be formed and which satisfies the condition described in (C) below; extruding the resulting solution with an extruder; cooling the extruded solution to form a gel-like shaped product composed of a two-phase gel; and then subjecting the shaped product to any treatment selected from the group consisting of the following treatments i), ii) and iii):

   i) removing the solvent by use of a volatile liquid without stretching the shaped product,
   ii) stretching the shaped product with a stretching residual strain of 100% or less and then removing the solvent by use of a volatile liquid,
   iii) removing the solvent by use of a volatile liquid, followed by stretching with a stretching residual strain of 100% or less;

   (B) said solvent capable of forming a microporous membrane having the percolation structure being defined as such a solvent that, for solutions of the vinylidene fluoride homopolymer or copolymer with a weight average molecular weight of $1 \times 10^5$ or more having concentrations in a range of 10 to 60 wt%, when dissolution temperature Ts is plotted as abscissa at regular intervals of 5°C, starting from Ts = 100°C, and the breaking extension TL of a membrane produced from the solution having each dissolution temperature is plotted as ordinate, a dissolution temperature at which - $(TL_{s+5} - TLs) / \{(Ts + 5°C) - Ts\}$ (wherein $TL_{s+5}$ is a TL value at Ts + 5°C and TLs is a TL value at Ts) becomes maximum is taken as Ts max, and a temperature 2.5°C higher than Ts max (Ts max + 2.5°C) is taken as Tu; on the other hand, when Ts is plotted as abscissa and the porosity P of the membrane as ordinate in the same manner as above, a dissolution temperature at which $(P_{s+5} - Ps) / \{(Ts + 5°C) - Ts\}$ (wherein $P_{s+5}$ is a P value at Ts + 5°C and Ps is a P value at Ts) becomes maximum is taken as T's max, and a temperature 2.5°C higher than T's max (T's max + 2.5°C) is taken as Tl; and at least one solution having a concentration in the above range of the concentration of the vinylidene fluoride homopolymer or copolymer has both Tl and Tu in such a way that (Tu - Tl) > 0 ;
   (C) Tl≦Ts≦Tu.

6. The process for producing a microporous membrane according to claim 5, wherein a liquid cooling medium is at least one medium selected from solvents capable of forming a microporous membrane having the percolation structure.

7. The process for producing a microporous membrane according to claim 6, wherein the liquid cooling medium is at least one member selected from the group consisting of phthalic acid esters, benzoic acid esters, sebacic acid esters, adipic acid esters, trimellitic acid esters, phosphoric esters and ketones.

8. A gel-like shaped product composed of a two-phase gel which is obtained by using a vinylidene fluoride homopolymer or copolymer having a weight average molecular weight of $1 \times 10^5$ or more and a solvent capable of forming a microporous membrane having the percolation structure which is defined in (B) below, in a weight ratio of 10 : 90 to 60 : 40; dissolving said vinylidene fluoride homopolymer or copolymer in said solvent at a dissolution temperature Ts at which the percolation structure can be formed and which satisfies the condition described in (C) below; extruding the resulting solution with an extruder; and then cooling the extruded solution;

   (B) said solvent capable of forming a microporous membrane having the percolation structure being defined as such a solvent that, for solutions of the vinylidene fluoride homopolymer or copolymer having any concentrations in a range of 10 to 60 wt%, when dissolution temperature Ts is plotted as abscissa at regular intervals of 5°C, starting from Ts = 100°C, and the breaking extension TL of a membrane produced from the solution having each dissolution temperature is plotted as ordinate, a dissolution temperature at which - $(TL_{s+5}$ - TLs$) / \{($Ts + 5°C$)$ - Ts$\}$ (wherein $TL_{s+5}$ is a TL value at Ts + 5°C and TLs is a TL value at Ts) becomes maximum is taken as Ts max, and a temperature 2.5°C higher than Ts max (Ts max + 2.5°C) is taken as Tu; on the other hand, when Ts is plotted as abscissa and the porosity P of the membrane as ordinate in the same manner as above, a dissolution temperature at which $(P_{s+5}$ - Ps$) / \{($Ts + 5°C$)$ - Ts$\}$ (wherein $P_{s+5}$ is a P value at Ts + 5°C and Ps is a P value at Ts) becomes maximum is taken as T's max, and a temperature 2.5°C higher than T's max (T's max + 2.5°C) is taken as Tl; and at least one solution having a concentration in the above range of the concentration of the vinylidene fluoride homopolymer or copolymer has both Tl and Tu in such a way that (Tu - Tl) > 0 ;

(C) Tl≦Ts≦Tu.

9. A process for producing a microporous membrane which comprises using a vinylidene fluoride homopolymer or copolymer having a weight average molecular weight of 1 x $10^5$ or more and a mixture of a solvent capable of forming a microporous membrane having a percolation structure which is defined in (B) below and a thermoplastic resin miscible with said vinylidene fluoride homopolymer or copolymer, in a weight ratio of 10 : 90 to 60 : 40; dissolving the vinylidene fluoride homopolymer or copolymer and the thermoplastic resin miscible therewith in the said solvent at a dissolution temperature Ts at which the percolation structure can be formed and which satisfies the condition described in (C) below, under such conditions that the total amount of said vinylidene fluoride homopolymer or copolymer and the thermoplastic resin miscible therewith is 60 wt% or less based on the weight of the resulting solution consisting of said vinylidene fluoride homopolymer or copolymer, said thermoplastic resin and said solvent, and the weight ratio of said vinylidene fluoride homopolymer or copolymer to the thermoplastic resin miscible therewith is 40 : 60 to 90 : 10; then extruding the solution with an extruder; cooling the extruded solution to form a gel-like shaped product composed of a two-phase gel; and then subjecting the shaped product to any treatment selected from the group consisting of the following treatments iv), v) and vi):

iv) removing the solvent and the thermoplastic resin miscible with the vinylidene fluoride homopolymer or copolymer by use of a volatile liquid without stretching the shaped product;
v) stretching the shaped product with a stretching residual strain of 100% or less, and then removing the solvent and the thermoplastic resin miscible with the vinylidene fluoride homopolymer or copolymer by use of a volatile liquid; and
vi) removing the solvent and the thermoplastic resin miscible with the vinylidene fluoride homopolymer or copolymer by use of a volatile liquid, followed by stretching with a stretching residual strain of 100% or less;

(B) said solvent capable of forming a microporous membrane having the percolation structure being defined as such a solvent that, for solutions of the vinylidene fluoride homopolymer or copolymer with a weight average molecular weight of 1 x $10^5$ or more having any concentrations in a range of 10 to 60 wt%, when dissolution temperature Ts is plotted as abscissa at regular intervals of 5°C, starting from Ts = 100°C, and the breaking extension TL of a membrane produced from the solution having each dissolution temperature is plotted as ordinate, a dissolution temperature at which - (TLs+5 - TLs$) / \{($Ts + 5°C$)$ - Ts$\}$ (wherein $TL_{s+5}$ is a TL value at Ts + 5°C and TLs is a TL value at Ts) becomes maximum is taken as Ts max, and a temperature 2.5°C higher than Ts max (Ts max + 2.5°C) is taken as Tu; on the other hand, when Ts is plotted as abscissa and the porosity P of the membrane as ordinate in the same manner as above, a dissolution temperature at which $(P_{s+5}$ - PS$) / \{($Ts + 5°C$)$ - Ts$\}$ (wherein $P_{s+5}$ is a P value at Ts + 5°C and Ps is a P value at Ts) becomes maximum is taken as T's max, and a temperature 2.5°C higher than T's max (T's max + 2.5°C) is taken as Tl; and at least one solution having a concentration in the above range of the concentration of the vinylidene fluoride homopolymer or copolymer has both Tl and Tu in such a way that (Tu - Tl) > 0 ;
(C) Tl≦Ts≦Tu.

10. The process for producing a microporous membrane according to claim 5 or 9, wherein the solvent capable of forming a microporous membrane having the percolation structure which is defined in (B) is at least one member selected from the group consisting of phthalic acid esters, benzoic acid esters, sebacic acid esters, adipic acid esters, trimellitic acid esters, phosphoric esters and ketones.

11. A process for producing a microporous membrane which comprises using a vinylidene fluoride homopolymer or copolymer having a weight average molecular weight of 1 x $10^5$ or more and a solvent capable of permitting observation of planar liquid-liquid interface which is defined in (D) below, in a weight ratio of 10 : 90 to 60 : 40; uniformly dissolving the vinylidene fluoride homopolymer or copolymer in said solvent to obtain a one-phase solution at a dissolution temperature Ts 10°C or more higher than the cloud point temperature determined by a standing method; extruding the resulting solution with an extruder; cooling the extruded solution to form a gel-like shaped product composed of a two-phase gel; and then subjecting the shaped product to any treatment selected from the group consisting of the following treatments vii), viii) and ix):

vii) removing the solvent by use of a volatile liquid without stretching the shaped product;

viii) stretching the shaped product with a stretching residual, strain of 100% or less, and then removing the solvent by use of a volatile liquid; and

ix) removing the solvent by use of a volatile liquid, followed by stretching with a stretching residual strain of 100% or less;

(D) a solvent which makes it possible to observe the planar liquid-liquid interface between a phase rich in the vinylidene fluoride homopolymer or copolymer and a phase lean in the vinylidene fluoride homopolymer or copolymer by a standing method comprising lowering the temperature of a solution prepared by uniform one-phase dissolution of the vinylidene fluoride homopolymer or copolymer in the solvent to any concentration in a range of 10 to 60 wt%, to any observation temperature which is not lower than the crystallization temperature and is in a two-phase region, and allowing the solution to stand.

12. A process for producing a microporous membrane according to any one of claims 5, 9 and 11, wherein the solution extruded with the extruder is cooled with at least one member selected from the group consisting of liquid cooling media, air and rolls.

# FIG.1

# FIG.2

CRYSTALLIZATION TEMPERATURE Tc

LOWER-LIMIT OF
TEMPERATURE TL

UPPER-LIMIT OF
TEMPERATURE Tu

NON-POROUS
MATERIAL
PRODUCTION
REGION

STRUCTURE
COARSENING
REGION

TEMPERATURE RANGE IN
WHICH THE PERCOLATION
STRUCTURE CAN BE FORMED

DISSOLUTION TEMPERATURE Ts

# FIG.3

# FIG.4

FIG. 5A

FIG. 5B

FIG. 5C

150°C

155°C

160°C

FIG. 6C

FIG. 6B

FIG. 6A

FIG. 7A

AIR

FIG. 7B

DMP

FIG. 7C

DEP

FIG. 7D

DOP

FIG. 7E

D I DP

FIG. 7F

DTDP

FIG. 7G

WATER

FIG. 7H

EG

FIG. 7I

DECALIN

# INTERNATIONAL SEARCH REPORT

International application No.

PCT/JP99/01265

| A. CLASSIFICATION OF SUBJECT MATTER |
|---|
| Int.Cl⁶ C08J9/28, 9/00, B01D71/34 |
| |
| According to International Patent Classification (IPC) or to both national classification and IPC |

| B. FIELDS SEARCHED |
|---|
| Minimum documentation searched (classification system followed by classification symbols)<br>    Int.Cl⁶ C08J9/00, 9/28, B01D71/34 |
| |
| Documentation searched other than minimum documentation to the extent that such documents are included in the fields searched |
| |
| Electronic data base consulted during the international search (name of data base and, where practicable, search terms used) |

## C. DOCUMENTS CONSIDERED TO BE RELEVANT

| Category* | Citation of document, with indication, where appropriate, of the relevant passages | Relevant to claim No. |
|---|---|---|
| A | JP, 7-265674, A (Paul Corp.),<br>17 October, 1995 (17. 10. 95),<br>Claims ; Par. Nos. [0060] to [0064]<br>& DE, 4445973, A1 & US, 5736051, A | 1-12 |
| A | JP, 3-215535, A (Asahi Chemical Industry Co., Ltd.),<br>20 September, 1991 (20. 09. 91),<br>Claims ; page 6, upper right column, line 3 to page 8<br>& EP, 378441, A & US, 5022990, A | 1-12 |
| A | JP, 60-97001, A (Teijin Ltd.),<br>30 May, 1985 (30. 05. 85),<br>Claims ; page 5, upper left column, line 8 to page 8 (Family: none) | 1-12 |
| A | JP, 56-152851, A (Penwalt Corp.),<br>26 November, 1981 (26. 11. 81),<br>Claims ; page 3, lower left column, line 4 to page 9 & EP, 40670, A | 1-12 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    24 May, 1999 (24. 05. 99) | Date of mailing of the international search report<br>    1 June, 1999 (01. 06. 99) |
|---|---|
| Name and mailing address of the ISA/<br>    Japanese Patent Office | Authorized officer |
| Facsimile No. | Telephone No. |

Form PCT/ISA/210 (second sheet) (July 1992)